# EUROPEAN PATENT SPECIFICATION

(11) **EP 3 598 704 B1**
(45) Date of publication and mention of the grant of the patent: **23.09.2026**
(21) Application number: 18767121.9
(22) Date of filing: 13.03.2018
(51) Int. Cl.: H04L 45/02, H04L 45/42, H04L 45/033

(54) **METHOD AND APPARATUS FOR ESTABLISHING DOMAIN-LEVEL TOPOLOGY AND NETWORK SYSTEM**
VERFAHREN UND VORRICHTUNG ZUR HERSTELLUNG EINER TOPOLOGIE AUF DOMAINEBENE UND NETZWERKSYSTEM
PROCÉDÉ ET APPAREIL POUR ÉTABLIR UNE TOPOLOGIE DE NIVEAU DE DOMAINE ET SYSTÈME DE RÉSEAU

(30) Priority: 13.03.2017 CN 201710147523
(43) Date of publication of application: 22.01.2020
(73) Proprietor: ZTE Corporation, Shenzhen, Guangdong 518057 (CN)
(72) Inventor: PENG, Shaofu, Shenzhen Guangdong 518057 (CN); JIN, Feicai, Shenzhen Guangdong 518057 (CN); ZHU, Shencai, Shenzhen Guangdong 518057 (CN); WANG, Huilai, Shenzhen Guangdong 518057 (CN); SUN, Jinsong, Shenzhen Guangdong 518057 (CN)
(74) Representative: Ipsilon
(86) International application number: PCT/CN2018/078883
(87) International publication number: WO 2018/166452

(56) References cited:
- EP-A1- 3 076 611
- WO-A1-2010/105698
- WO-A1-2011/103913
- CN-A- 101 068 249
- CN-A- 101 854 291
- US-A1- 2006 209 716

## Description

### TECHNICAL FIELD

The present application relates to a field of communications technology, for example, to a method and device for establishing a domain-level topology, and a network system.

### BACKGROUND

When calculating a path across domains, a Path Computation Element (PCE) needs to determine which domains the path traverses. The domain may be an Interior Gateway Protocol (IGP) area or a Border Gateway Protocol (BGP) Autonomous System (AS), etc., but is not limited thereto.

In the related art, the PCE may calculate the path across domains by the flowing methods: 1) a per-domain path calculation technology defined by RFC5152; 2) a reverse-recursion PCE calculation technology defined by RFC5441; and 3) a hierarchical PCE technology defined by RFC6805. In the three methods, the first method could not determine a path at the domain-level. The second method belongs to a method of Virtual Shortest Path Tree (VSPT) by flooding, which has obvious scalability problems. The third method merely discusses how to establish a domain-level topology through BGP Link State (BGP-LS), in the hierarchical PCE architecture, but fails to discuss cases in a flat network architecture, such as non-hierarchical PCE, and fails to disclose how to determine the egress domain. Therefore, the domain-level topology establishment method is incomplete in the related art.

The International patent application WO 2011/103913 A1 discloses a multi-domain network (10) comprising domains (AS A - AS E) of different network technology types. A network domain (AS A) comprises a plurality of network nodes (12, 14) connected by links (13) and comprising border nodes (12) which connect with other network domains (AS B, AS C, AS D). In a first domain (AS A) of a first technology type, a method comprises determining an intra-domain topology of the nodes (12, 14) and links (13) of the domain by collecting values of at least one network topology parameter of the first technology type. The method determines a summarised intra-domain topology of paths between border nodes (12) of the domain which is described using values of at least one summarised network topology parameter. Values of the summarised network topology parameter are derived from the values of the network topology parameter of the intra-domain topology of the first technology type. The summarised network topology parameter is part of a common set of network topology parameters for advertising between domains comprising apparatus of different technology types. A domain can comprise multiple layers of different technology type.

U.S. patent application 2006/209716 A1 discloses a technique which dynamically triggers an exchange of reachability information between a tail-end (remote) domain target node (e.g., a tail-end node) of a traffic engineering (TE) label switched path (LSP) and a local domain head-end node of the TE-LSP in a computer network. The inter-domain information retrieval technique is illustratively based on triggering a Border Gateway Protocol (BGP) session whereby at least a portion of the reachability, i.e., routing, information of the tail-end node is transmitted to the head-end node of the TE-LSP in accordance with BGP. Specifically, once a TE-LSP is established between the head-end node and the tail-end node, the head-end node triggers the tail-end node, e.g., through extensions to a request/response signaling exchange, to establish the BGP session. Establishment of the BGP session enables transmission of the routing information from the tail-end node to the head-end node. The head-end node uses the routing information to calculate routes, i.e., address prefixes and associated attributes, reachable from the tail-end node for insertion into its routing table.

European patent application EP3076611 A1 discloses a network information combination apparatus combining topology information from multiple controller-managed domains using boundary-link information, enabling inter-domain flow computation and decomposition into domain-specific packet-processing rules.

### SUMMARY

The invention is defined by the appended claims.

Embodiments of the present disclosure provide a method and a device for establishing a domain-level topology, and a network system, to at least solve a problem that the domain-level topology establishment method is incomplete in the related art.

According to an embodiment of the present disclosure, there is provided a method for establishing a domain-level topology as claimed in claim 1.

According to an embodiment of the present disclosure, there is provided a device for establishing a domain-level topology as claimed in claim 10.

According to an embodiment of the present disclosure, there is provided a node as claimed in claim 11.

According to an embodiment of the present disclosure, there is provided a network system as claimed in claim 12.

According to an embodiment of the present disclosure, there is further provided a storage medium as claimed in claimed 13.

According to an embodiment of the disclosure, there is further provided a processor configured to execute a program, wherein the program is executed to implement the method of the embodiment above.

According to embodiments of the present disclosure, a first boundary node acquires domain information of boundary nodes in at least two domains, wherein the first boundary node is in one of the at least two domains, and the at least two domains include adjacent domains or non-adjacent domains; and the first boundary node establishes the domain-level topology including the at least two domains according to the domain information of the boundary nodes in the at least two domains; that is, the boundary node may acquire the domain information of boundary nodes in at least two domains, and thus may acquire the domain information of boundary nodes in the entire network. Thereby, the boundary node may generate the domain-level topology. Since the domain-level topology may be established whether an embedded PCE function or an external PCE function exists on the boundary node, and whether the entire network is in a hierarchical PCE architecture or in a non-hierarchical PCE architecture, the problem that the domain-level topology establishment method is incomplete in the related art can be solved, and thus the domain-level topology establishment method is unified.

### BRIEF DESCRIPTION OF THE DRAWINGS

FIG. 1 is a flowchart illustrating a method for establishing a domain-level topology according to an embodiment of the present disclosure;
FIG. 2 is a block diagram illustrating a structure of a device for establishing a domain-level topology according to an embodiment of the present disclosure;
FIG. 3 is a diagram illustrating a structure of a node according to an embodiment of the present disclosure;
FIG. 4 is a diagram illustrating a format of a domain-link Network Layer Reachability Information (NLRI) according to an embodiment of the present disclosure;
FIG. 5 is a diagram illustrating a format of a domain Network Layer Reachability Information (NLRI) according to an embodiment of the present disclosure;
FIG. 6 is a diagram illustrating a format of a link Network Layer Reachability Information (NLRI) according to an embodiment of the present disclosure;
FIG. 7 is a diagram illustrating a format of a Local/Remote Domain Descriptors Type Length Value (TLV) according to an embodiment of the present disclosure;
FIG. 8 is a cross-domain diagram when the domain is an AS according to Embodiment 6 of the present disclosure;
FIG. 9 is a cross-domain diagram when the domain is an Open Shortest Path First (OSPF) area, according to an embodiment of the present disclosure;
FIG. 10 is a cross-domain diagram when the domain is an Intermediate System to Intermediate System (ISIS) level, according to Embodiment 8 of the present disclosure;
FIG. 11 is a cross-domain diagram when the domain is an AS with an external PCE according to Embodiment 9 of the present disclosure; and
FIG. 12 is a cross-domain diagram for a hierarchical PCE according to Embodiment 10 of the present disclosure.

### DETAILED DESCRIPTION

The present disclosure will be described in detail below with reference to the drawings in conjunction with embodiments. In an embodiment, the terms "first", "second", etc. in the specification, claims and the above figures of the present disclosure are used to distinguish similar objects, and are not necessarily used to describe a particular order or sequence.

According to the per-domain path calculation technology defined by RFC5152, the path is calculated on a per-domain basis in a signaling process. An ingress boundary node in each domain is configured to compute a path segment of the domain or request the PCE to calculate the path segment. This method needs to know in advance a domain-level path (or domain sequence), i.e., needs to know in advance the sequence is consist of which ingress boundary node or egress boundary node in the domain, that is, this method fails to discuss how to determine the domain-level path. According to the reverse-recursion PCE calculation technology defined by RFC5441, a cross-domain path is calculated through cooperation and communication between multiple PCEs. When the domain sequence is not known in advance, the Path Computation Client (PCC) of a domain where the path head node is located (i.e., an ingress domain) transmits a request to its PCE, and the PCE directly transmits a request to a PCE of a domain where the path tail node is located (i.e., an egress domain). The PCE of the egress domain will set up an optional path set as the virtual shortest path tree (VSPT) based on the paths from all the ingress boundary nodes to the egress Label Switch Routers (LSRs), and transmit it to all the PCEs of adjacent domains. A PCE of the adjacent domain continue to compute the VSPT and floods it to all the PCEs of adjacent domains. By analogy, upon reception by the PCE of the ingress domain, it may select a shortest end-to-end path. This method of flooding VSPT has an obvious scalability problem. According to the hierarchical PCE technology defined by RFC6805, a parent-PCE maintains a domain-level topology, it merely needs to know the links between domains and the traffic engineering (TE) information of these links, and needs not to know an internal topology of each domain and the TE information of the internal topology. At least one PCE of a domain is configured to calculate the path within the domain, and the PCE of each domain is called a child-PCE. The parent-PCE may establish a domain-level topology by configuration or receiving information from each child-PCE. When a path across domains is to be established, the child-PCE corresponding to the ingress domain transmits a request to the parent-PCE. The parent-PCE selects a set of candidate domain sequences based on the domain-level topology and the state of the links between domains, and then transmits (serially or in parallel) a calculation request to each of the corresponding child-PCEs in the domain sequence. Each child-PCE calculates a set of candidate path segments and returns it to the parent-PCE. The parent-PCE uses this information to select a shortest end-to-end path and return it to the PCE of the ingress domain, which in turn returns it to a corresponding PCC. In this method, the parent-PCE may collect the link state information between domains and the TE information of these links from the child-PCEs through the BGP Link State (BGP-LS) protocol (that is, the link state information of IGP is advertised from the BGP) defined by RFC7752. This is an optional way in the hierarchical PCE architecture, but not all the networks have the hierarchical PCE architecture. The problem of the hierarchical PCE network includes a need of a plurality of static configuration between the parent-PCE and the child-PCEs, such as, the location information of all the child-PCEs needs to be configured on the parent-PCE. This method merely discusses how to establish the domain-level topology through BGP-LS in the hierarchical PCE architecture, but fails to discuss cases in non-hierarchical PCE architecture, such as a flat network architecture, and also fails to disclose how to determine the egress domain.

### Embodiment 1

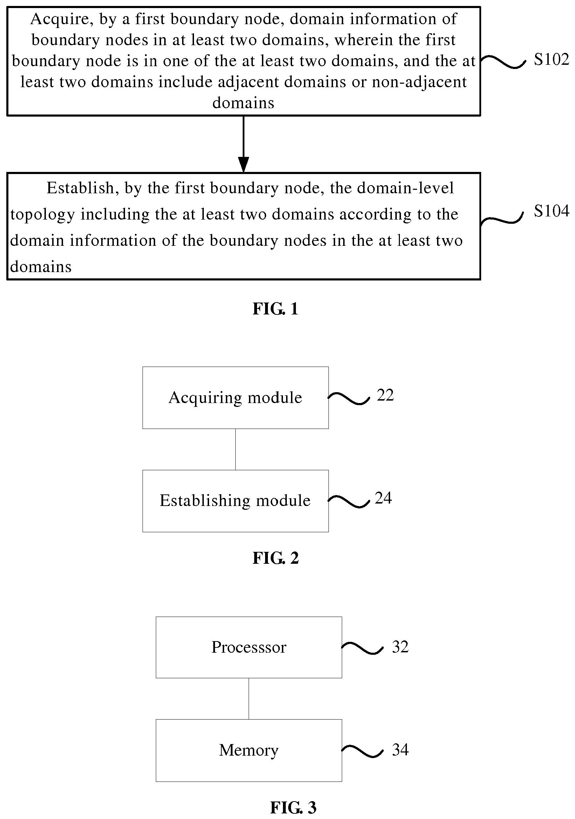

In this embodiment, a method for establishing a domain-level topology running on a network architecture is provided. This embodiment can run in a network architecture of a hierarchical PCE or in a network architecture of a non-hierarchical PCE. For example, the network architecture of the non-hierarchical PCE may include a flat network architecture. FIG. 1 is a flowchart illustrating a method for establishing a domain-level topology according to an embodiment of the present disclosure. As shown in FIG. 1, the process includes the following steps S102 to S104.

At step S102, a first boundary node acquires domain information of boundary nodes in at least two domains, wherein the first boundary node is in one of the at least two domains, and the at least two domains include adjacent domains or non-adjacent domains. According to the claimed invention, the at least two two domains are non-adjacent.

At step S104, the first boundary node establishes the domain-level topology including the at least two domains according to the domain information of the boundary nodes in the at least two domains.

Through the above steps, the first boundary node may acquire the domain information of boundary nodes in at least two domains, and thus may acquire the domain information of boundary nodes in the entire network, that is, the first boundary node may establish the domain-level topology. Since the domain-level topology may be established whether an embedded PCE function or an external PCE function exists on the boundary node, and whether the entire network is in a hierarchical PCE architecture or in a non-hierarchical PCE architecture, the problem that the domain-level topology establishment method is incomplete in the related art can be solved, and thus the domain-level topology establishment method is unified.

In an embodiment, the adjacency between domains in the at least two domains refers to that one of the at least two domains and another domain in the at least two domains are connected by a link, which may be a physical link or a virtual link, and is not limited thereto. In an embodiment, the non-adjacent between domains in the at least two domains refers to that, in addition to the link, there may be an additional domain or an additional connection between one of the at least two domains and another domain in the at least two domains. In an embodiment, the at least two domains including the adjacent domains may refers to that: some of the at least two domains are adjacent to each other, or all of the domains in the at least two domains are adjacent to each other; the at least two domains including non-adjacent domains may refers to that: some of the at least two domains are not adjacent to each other, or none of the at least two domains are adjacent to each other.

In an embodiment, the first boundary node may be a boundary node in any domain of the entire network, but is not limited thereto.

In an embodiment, the above domains may include at least one of: an autonomous system (AS), an open shortest path first (OSPF) area, and an Intermediate System to Intermediate System (ISIS) level, but is not limited thereto.

In an embodiment, the at least two domains may be all domains of the entire network, or may be domains of the entire network in which boundary nodes configured with a domain information advertisement capability are located.

In an embodiment of the present disclosure, the boundary nodes in the at least two domains may include boundary nodes configured with the domain information advertisement capability in the at least two domains.

In an embodiment, the domain information of the boundary node may include: a domain identification (ID) of a domain to which the boundary node belongs, and link information between a specified domain and the domain to which the boundary node belongs, wherein the specified domain is a domain adjacent to the domain to which the boundary node belongs.

In an embodiment, the above link information may include: a domain ID of the domain to which the boundary node belongs, a node ID of the boundary node, an interface Internet Protocol (IP) address or an interface index of the boundary node, a domain ID of the specified domain, an ID of a node adjacent to the boundary node and in the specified domain, and an interface IP address or an interface index of the node adjacent to the boundary node and in the specified domain.

In an embodiment, the domain information of the boundary node may further include: a set of publicly available IP addresses in the domain to which the boundary node belongs.

In an embodiment of the present disclosure, the above step S102 may be interpreted as: the first boundary node acquires domain information configured to itself, and acquires the domain information of boundary nodes in the at least two domains except the first boundary node, by using a border gateway protocol (BGP). That is, interactions between the first boundary node and other boundary nodes in a same domain as the first boundary node, and between the first boundary node and boundary nodes in a domain adjacent to the domain in which the first boundary node is located, may be implemented by the BGP.

In an embodiment, the domain information of boundary nodes in the at least two domains except the first boundary node is carried in the BGP and is advertised to the first boundary node.

In an embodiment, the acquiring, by the first boundary node, the domain information of boundary nodes in the at least two domains except the first boundary node by using the BGP may include: acquiring, by the first boundary node, the domain information transmitted by a first specified neighbor node of the first boundary node, by using the BGP, wherein the first specified neighbor node of the first boundary node may include at least one of: a boundary node in a domain to which the first boundary node belongs except the first boundary node, and a boundary node adjacent to the first boundary node and in a domain adjacent to the domain to which the first boundary node belongs. In an embodiment, the domain information transmitted by the first specified neighbor node of the first boundary node not only includes the domain information of the first specified neighbor node itself, but also includes domain information transmitted to the first specified neighbor node from a neighbor node of the first specified neighbor node. The neighbor node of the first specified neighbor node may be interpreted in a same way as the explanation of the first specified neighbor node of the first boundary node, and details thereof are not described herein again.

In an embodiment of the present disclosure, the method may further include: transmitting, by the first boundary node, the domain information and specified information of the first boundary node to a second specified neighbor node of the first boundary node by using the BGP, wherein the specified information is domain information received by the first boundary node and transmitted from neighboring nodes of the first boundary node except the second specified neighboring node, and wherein the second specified neighboring node includes at least one of: a boundary node in a domain to which the first boundary node belongs except the first boundary node, and a boundary node adjacent to the first boundary node and in a domain adjacent to the domain to which the first boundary node belongs. That is, the first boundary node may advertise the domain information of the first boundary node to a neighbor node in a local domain by using the BGP, may forward the domain information of a boundary node in a remote domain received by the first boundary node to the neighbor node in the local domain, may advertise the domain information of the first boundary node to a neighbor node in a adjacent domain by using the BGP, and may forward the domain information of a boundary node in a remote domain received by the first boundary node to the neighbor node in the adjacent domain by using the BGP.

In an embodiment of the present disclosure, after the step S102, the method may further include: storing, by the first boundary node, the domain information of the boundary nodes in the at least two domains.

In an embodiment, the first boundary node may store the domain information of the boundary nodes in the at least two domains in a domain database of the first boundary node for subsequent maintenance, and the domain database may include all the domain information of the boundary nodes in the entire network.

In an embodiment of the present disclosure, after the step S104, the method may further include: receiving, by the first boundary node, request information transmitted by a Path Calculation Client (PCC) for requesting to establish a path from the first boundary node to a specified destination node, wherein the specified destination node includes one of: a boundary node in the domain-level topology except the first boundary node, a boundary node corresponding to a publicly available IP address in the domain-level topology except the first boundary node, and wherein the request information includes at least the following information: an IP address of the first boundary node, an IP address of the specified destination node, and a constraint for path calculation; and determining a domain sequence from the first boundary node to the specified destination node, according to the domain-level topology and the request information.

In an embodiment, there may be multiple determined domain sequences, but is not limited thereto. After determining the domain sequence, the above method may further include: calculating, for each domain sequence, an optional end-to-end path according to the per-domain path calculation technology defined by RFC5152 or the reverse-recursion PCE calculation technology defined by RFC544; and selecting a path, for example, a shortest end-to-end path, among the optional end-to-end paths corresponding to all domain sequences.

In an embodiment of the present disclosure, a Path Computation Element (PCE) is embedded on the first boundary node, or an external PCE is configured outside a domain to which the first boundary node belongs. In a case where the external PCE is configured outside the domain to which the first boundary node belongs, the step S104 may includes: the first boundary node or a route reflector node in the domain to which the first boundary node belongs transmits the acquired domain information of the boundary nodes in the at least two domains to the external PCE, such that the external PCE establishes the domain-level topology according to the domain information of the boundary nodes in the at least two domains.

Through description of the above embodiments, those skilled in the art can clearly understand that the methods according to the above embodiments may be implemented by software and a necessary general hardware platform, and of course, by hardware; in many cases, the former is an exemplary implementation. Based on such understanding, an essential part of the technical solution of the present disclosure, or a part of the technical solution of the present disclosure which contributes to existing art, may be embodied in a form of software product stored in a storage medium (such as ROM/RAM, disk, disc), and includes a number of instructions for causing a terminal device (which may be a cell phone, a computer, a server, or a network device, etc.) to perform the methods described in various embodiments of the present disclosure.

### Embodiment 2

In this embodiment, a device for establishing a domain-level topology is provided, and the device is configured to implement the above embodiments and optional implementations, the details of which will not repeat again herein. As used below, the term "module" may be a combination of software and/or hardware which may implement a predetermined function. Although a device described in a following embodiment may be implemented in software, an implementation in hardware, or a combination of software and hardware is also possible and may be contemplated.

FIG. 2 is a block diagram illustrating a structure of a device for establishing a domain-level topology according to an embodiment of the present disclosure. As shown in FIG. 2, the device includes an acquiring module 22 and an establishing module 24.

The acquiring module 22 is configured to acquire domain information of boundary nodes in at least two domains, wherein the at least two domains include adjacent domains or non-adjacent domains.

The establishing module 24 is connected to the acquiring module 22, and is configured to establish the domain-level topology including the at least two domains according to the domain information of the boundary nodes in the at least two domains.

In an embodiment, the above device is located in the boundary node, but is not limited thereto.

Through the above device, the domain information of boundary nodes in at least two domains may be acquired, that is, the domain information of boundary nodes in the entire network may be acquired, and thus the domain-level topology may be established. Since the domain-level topology may be established whether an embedded PCE function or an external PCE function exists on the boundary node, and whether the entire network is in a hierarchical PCE architecture or in a non-hierarchical PCE architecture, the problem that the domain-level topology establishment method is incomplete in the related art can be solved, and thus the domain-level topology establishment method is unified.

In an embodiment, the adjacency between domains in the at least two domains refers to that one of the at least two domains and another domain in the at least two domains are connected by a link, which may be a physical link or a virtual link, and is not limited thereto. In an embodiment, the non-adjacent between domains in the at least two domains refers to that, in addition to the link, there may be an additional domain or an additional connection between one of the at least two domains and another domain in the at least two domains. In an embodiment, the at least two domains including the adjacent domains may refers to that: some of the at least two domains are adjacent to each other, or all of the domains in the at least two domains are adjacent to each other; the at least two domains including non-adjacent domains may refers to that: some of the at least two domains are not adjacent to each other, or none of the at least two domains are adjacent to each other.

In an embodiment, the above domains may include at least one of: an autonomous system (AS), an OSPF area, and an ISIS level, but is not limited thereto.

In an embodiment, the at least two domains may be all domains of the entire network, or may be domains of the entire network in which boundary nodes configured with a domain information advertisement capability are located.

In an embodiment of the present disclosure, the boundary nodes in the at least two domains may include boundary nodes configured with the domain information advertisement capability in the at least two domains.

In an embodiment, the domain information of the boundary node may include: a domain identification (ID) of a domain to which the boundary node belongs, and link information between a specified domain and the domain to which the boundary node belongs, wherein the specified domain is a domain adjacent to the domain to which the boundary node belongs.

In an embodiment, the above link information may include: a domain ID of the domain to which the boundary node belongs, a node ID of the boundary node, an interface Internet Protocol (IP) address or an interface index of the boundary node, a domain ID of the specified domain, an ID of a node adjacent to the boundary node and in the specified domain, and an interface IP address or an interface index of the node adjacent to the boundary node and in the specified domain.

In an embodiment, the domain information of the boundary node may further include: a set of publicly available IP addresses in the domain to which the boundary node belongs.

In an embodiment of the present disclosure, the acquiring module 22 is configured to: acquire domain information configured to itself, and acquire the domain information of boundary nodes in the at least two domains except the first boundary node, by using a border gateway protocol (BGP). In an embodiment, the first boundary node may be a boundary node in any domain of the entire network, but is not limited thereto.

In an embodiment, the acquiring module 22 is further configured to acquire the domain information transmitted by a first specified neighbor node of the first boundary node, by using the BGP, wherein the first specified neighbor node of the first boundary node may include at least one of: a boundary node in a domain to which the first boundary node belongs except the first boundary node, and a boundary node adjacent to the first boundary node and in a domain adjacent to the domain to which the first boundary node belongs. In an embodiment, the domain information transmitted by the first specified neighbor node of the first boundary node not only includes the domain information of the first specified neighbor node itself, but also includes domain information transmitted to the first specified neighbor node from a neighbor node of the first specified neighbor node. The neighbor node of the first specified neighbor node may be interpreted in a same way as the explanation of the first specified neighbor node of the first boundary node, and details thereof are not described herein again.

In an embodiment of the present disclosure, the device may further include: a transmitting module connected to the acquiring module 22, and configured to: transmit the domain information and specified information of the first boundary node to a second specified neighbor node of the first boundary node by using the BGP, wherein the specified information is domain information received by the first boundary node and transmitted from neighboring nodes of the first boundary node except the second specified neighboring node, and wherein the second specified neighboring node includes at least one of: a boundary node in a domain to which the first boundary node belongs except the first boundary node, and a boundary node adjacent to the first boundary node and in a domain adjacent to the domain to which the first boundary node belongs.

In an embodiment of the present disclosure, the device further includes: a storing module connected to the acquiring module 22, and configured to: store the domain information of the boundary nodes in the at least two domains.

In an embodiment of the present disclosure, the acquiring module 22 is further configured to: receive request information transmitted by a Path Calculation Client (PCC) for requesting to establish a path from the first boundary node to a specified destination node, wherein the specified destination node includes one of: a boundary node in the domain-level topology except the first boundary node, a boundary node corresponding to a publicly available IP address in the domain-level topology except the first boundary node, and wherein the request information includes at least the following information: an IP address of the first boundary node, an IP address of the specified destination node, and a constraint for path calculation. The device further includes a determining module connected to the acquiring module, and configured to determine a domain sequence from the first boundary node to the specified destination node, according to the domain-level topology and the request information.

In an embodiment, there may be multiple determined domain sequences, but is not limited thereto. The determining module is further configured to calculate, for each domain sequence, an optional end-to-end path according to the per-domain path calculation technology defined by RFC5152 or the reverse-recursion PCE calculation technology defined by RFC544; and select a path, for example, a shortest end-to-end path, among the optional end-to-end paths corresponding to all domain sequences.

In an embodiment of the present disclosure, a Path Computation Element (PCE) is embedded on the first boundary node, or an external PCE is configured outside a domain to which the first boundary node belongs. In a case where the external PCE is configured outside the domain to which the first boundary node belongs, the establishing module 24 may be located in the external PCE outside the domain to which the first boundary node belongs, and the transmitting module is further configured to transmit the acquired domain information of the boundary nodes in the at least two domains to the external PCE, such that the establishing module 24 cause the external PCE establishes the domain-level topology according to the domain information of the boundary nodes in the at least two domains.

In an embodiment, each of the above modules may be implemented by software or hardware. For the latter, the above modules may be implemented (but not limited to) in a manner that all the above modules being located in a same processor; or each of the above modules being located in different processors in any combination.

### Embodiment 3

An embodiment of the present disclosure provides a node. FIG. 3 is a diagram illustrating a structure of a node according to an embodiment of the present disclosure. As shown in FIG. 3, the node includes a processor 32 and a memory 34.

The processor 32 is configured to acquire domain information of boundary nodes in at least two domains, and establish the domain-level topology including the at least two domains according to the domain information of the boundary nodes in the at least two domains, wherein the node is in one of the at least two domains, and the at least two domains include adjacent domains or non-adjacent domains.

The memory 34 is coupled to the processor 32.

Through the above-mentioned nodes, the domain information of boundary nodes in at least two domains may be acquired, thus the domain information of boundary nodes in the entire network may be acquired, and the domain-level topology may be established. Since the domain-level topology may be established whether an embedded PCE function or an external PCE function exists on the boundary node, and whether the entire network is in a hierarchical PCE architecture or in a non-hierarchical PCE architecture, the problem that the domain-level topology establishment method is incomplete in the related art can be solved, and thus the domain-level topology establishment method is unified.

In an embodiment, the above node may be a first boundary node, or may be other nodes in the network, but is not limited thereto.

In an embodiment, the first boundary node may be a boundary node in any domain of the entire network, but is not limited thereto.

In an embodiment, the above domains may include at least one of: an autonomous system (AS), an OSPF area, and an ISIS level, but is not limited thereto.

In an embodiment, the at least two domains may be all domains of the entire network, or may be domains of the entire network in which boundary nodes configured with a domain information advertisement capability are located.

In an embodiment of the present disclosure, the boundary nodes in the at least two domains may include boundary nodes configured with the domain information advertisement capability in the at least two domains.

In an embodiment, the domain information of the boundary node may include: a domain identification (ID) of a domain to which the boundary node belongs, and link information between a specified domain and the domain to which the boundary node belongs, wherein the specified domain is a domain adjacent to the domain to which the boundary node belongs.

In an embodiment, the above link information may include: a domain ID of the domain to which the boundary node belongs, a node ID of the boundary node, an interface Internet Protocol (IP) address or an interface index of the boundary node, a domain ID of the specified domain, an ID of a node adjacent to the boundary node and in the specified domain, and an interface IP address or an interface index of the node adjacent to the boundary node and in the specified domain.

In an embodiment, the domain information of the boundary node may further include: a set of publicly available IP addresses in the domain to which the boundary node belongs.

In an embodiment of the present disclosure, the processor 32 is configured to acquire domain information configured to itself, and acquire the domain information of boundary nodes in the at least two domains except the first boundary node, by using a border gateway protocol (BGP).

In an embodiment, the processor 32 is configured to acquire the domain information transmitted by a first specified neighbor node of the first boundary node, by using the BGP, wherein the first specified neighbor node of the first boundary node may include at least one of: a boundary node in a domain to which the first boundary node belongs except the first boundary node, and a boundary node adjacent to the first boundary node and in a domain adjacent to the domain to which the first boundary node belongs. In an embodiment, the domain information transmitted by the first specified neighbor node of the first boundary node not only includes the domain information of the first specified neighbor node itself, but also includes domain information transmitted to the first specified neighbor node from a neighbor node of the first specified neighbor node. The neighbor node of the first specified neighbor node may be interpreted in a same way as the explanation of the first specified neighbor node of the first boundary node, and details thereof are not described herein again.

In an embodiment, the processor 32 is further configured to transmit the domain information and specified information of the first boundary node to a second specified neighbor node of the first boundary node by using the BGP, wherein the specified information is domain information received by the first boundary node and transmitted from neighboring nodes of the first boundary node except the second specified neighboring node, and wherein the second specified neighboring node includes at least one of: a boundary node in a domain to which the first boundary node belongs except the first boundary node, and a boundary node adjacent to the first boundary node and in a domain adjacent to the domain to which the first boundary node belongs.

In an embodiment of the present disclosure, the memory 34 is configured to store the domain information of the boundary nodes in the at least two domains, that is, to store domain information of boundary nodes in the entire network.

In an embodiment of the present disclosure, the processor 32 is further configured to receive request information transmitted by a Path Calculation Client (PCC) for requesting to establish a path from the first boundary node to a specified destination node, wherein the specified destination node includes one of: a boundary node in the domain-level topology except the first boundary node, a boundary node corresponding to a publicly available IP address in the domain-level topology except the first boundary node, and wherein the request information includes at least the following information: an IP address of the first boundary node, an IP address of the specified destination node, and a constraint for path calculation. The processor 32 is further configured to determine a domain sequence from the first boundary node to the specified destination node, according to the domain-level topology and the request information.

In an embodiment, there may be multiple determined domain sequences, but is not limited thereto. The processor 32 is further configured to: calculate, for each domain sequence, an optional end-to-end path according to the per-domain path calculation technology defined by RFC5152 or the reverse-recursion PCE calculation technology defined by RFC544; and select a path, for example, a shortest end-to-end path, among the optional end-to-end paths corresponding to all domain sequences.

In an embodiment of the present disclosure, a Path Computation Element (PCE) is embedded on the first boundary node, or an external PCE is configured outside a domain to which the first boundary node belongs. In a case where the external PCE is configured outside the domain to which the first boundary node belongs, the processor 32 may be located in the external PCE outside the domain to which the first boundary node belongs, and the first boundary node or a route reflector node in the domain to which the first boundary node belongs transmits the acquired domain information of the boundary nodes in the at least two domains to the external PCE, and the processor 32 is configured to establishes the domain-level topology according to the domain information of the boundary nodes in the at least two domains.

### Embodiment 4

An embodiment of the present disclosure further provides a network system, including: at least two domains, and a plurality of boundary nodes belonging to the at least two domains, wherein the at least two domains include adjacent domains or non-adjacent domains; each of the plurality of boundary nodes functions as a first boundary node and is configured to acquire domain information of the boundary nodes in the at least two domains, wherein the domain information of the boundary nodes in the at least two domains is used to establish a domain-level topology including the at least two domains.

Through the network system, each boundary node may acquire the domain information of boundary nodes in at least two domains, and thus may acquire the domain information of boundary nodes in the entire network, that is, the boundary node may establish the domain-level topology. Since the domain-level topology may be established whether an embedded PCE function or an external PCE function exists on the boundary node, and whether the entire network is in a hierarchical PCE architecture or in a non-hierarchical PCE architecture, the problem that the domain-level topology establishment method is incomplete in the related art can be solved, and thus the domain-level topology establishment method is unified.

In an embodiment, the above domains may include at least one of: an autonomous system (AS), an OSPF area, and an ISIS level, but is not limited thereto.

In an embodiment, the at least two domains may be all domains of the entire network, or may be domains of the entire network in which boundary nodes configured with a domain information advertisement capability are located.

In an embodiment of the present disclosure, the boundary nodes in the at least two domains may include boundary nodes configured with the domain information advertisement capability in the at least two domains.

In an embodiment, the domain information of the boundary node may include: a domain identification (ID) of a domain to which the boundary node belongs, and link information between a specified domain and the domain to which the boundary node belongs, wherein the specified domain is a domain adjacent to the domain to which the boundary node belongs.

In an embodiment, the above link information may include: a domain ID of the domain to which the boundary node belongs, a node ID of the boundary node, an interface Internet Protocol (IP) address or an interface index of the boundary node, a domain ID of the specified domain, an ID of a node adjacent to the boundary node and in the specified domain, and an interface IP address or an interface index of the node adjacent to the boundary node and in the specified domain.

In an embodiment, the domain information of the boundary node may further include: a set of publicly available IP addresses in the domain to which the boundary node belongs.

In an embodiment of the present disclosure, each boundary node is configured to: acquire domain information configured to itself, and acquire the domain information of boundary nodes in the at least two domains except the boundary node itself, by using a border gateway protocol (BGP).

In an embodiment, the first boundary node may be configured to acquire the domain information transmitted by a first specified neighbor node of the first boundary node, by using the BGP, wherein the first specified neighbor node of the first boundary node may include at least one of: a boundary node in a domain to which the first boundary node belongs except the first boundary node, and a boundary node adjacent to the first boundary node and in a domain adjacent to the domain to which the first boundary node belongs. In an embodiment, the domain information transmitted by the first specified neighbor node of the first boundary node not only includes the domain information of the first specified neighbor node itself, but also includes domain information transmitted to the first specified neighbor node from a neighbor node of the first specified neighbor node. The neighbor node of the first specified neighbor node may be interpreted in a same way as the explanation of the first specified neighbor node of the first boundary node, and details thereof are not described herein again.

In an embodiment, the first boundary node may be further configured to transmit the domain information and specified information of the first boundary node to a second specified neighbor node of the first boundary node by using the BGP, wherein the specified information is domain information received by the first boundary node and transmitted from neighboring nodes of the first boundary node except the second specified neighboring node, and wherein the second specified neighboring node includes at least one of: a boundary node in a domain to which the first boundary node belongs except the first boundary node, and a boundary node adjacent to the first boundary node and in a domain adjacent to the domain to which the first boundary node belongs.

In an embodiment of the present disclosure, the first boundary node may be further configured to store the domain information of the boundary nodes in the at least two domains, that is, to store domain information of the boundary nodes in the entire network.

In an embodiment of the present disclosure, the first boundary node may be further configured to receive request information transmitted by a Path Calculation Client (PCC) for requesting to establish a path from the first boundary node to a specified destination node, wherein the specified destination node includes one of: a boundary node in the domain-level topology except the first boundary node, a boundary node corresponding to a publicly available IP address in the domain-level topology except the first boundary node, and wherein the request information includes at least the following information: an IP address of the first boundary node, an IP address of the specified destination node, and a constraint for path calculation. The first boundary node may be further configured to determine a domain sequence from the first boundary node to the specified destination node, according to the domain-level topology and the request information.

In an embodiment, there may be multiple determined domain sequences, but the domain sequence is not limited thereto. The first boundary node is further configured to calculate, for each domain sequence, an optional end-to-end path according to the per-domain path calculation technology defined by RFC5152 or the reverse-recursion PCE calculation technology defined by RFC544; and select a path, for example, a shortest end-to-end path, among the optional end-to-end paths corresponding to all domain sequences.

In an embodiment of the present disclosure, a Path Computation Element (PCE) is embedded on the first boundary node, or an external PCE is configured outside a domain to which the first boundary node belongs. In a case where the external PCE is configured outside the domain to which the first boundary node belongs, the establishing, by the first boundary node, the domain-level topology including the at least two domains according to the domain information of the boundary nodes in the at least two domains may be interpreted as: the first boundary node or a route reflector node in the domain to which the first boundary node belongs transmits the acquired domain information of the boundary nodes in the at least two domains to the external PCE, such that the external PCE establishes the domain-level topology according to the domain information of the boundary nodes in the at least two domains.

### Embodiment 5

The embodiment of the disclosure further provides a storage medium. Optionally, in the present embodiment, the above storage medium may be configured to store program code for implementing the methods in the embodiments of the present disclosure.

Optionally, in this embodiment, the above storage medium may include, but not limited to, a USB flash drive, a Read-Merely Memory, called ROM, a Random Access Memory, called RAM, a mobile hard disk, and a disk or a disc, that can store program code.

Optionally, in this embodiment, the processor implements steps of the method in Embodiment 1 according to the stored program code in the storage medium.

Optionally, examples of this embodiment may refer to examples described in the above embodiments and optional implementations, and the details thereof will not be repeated herein again.

For a better understanding of the disclosure, the disclosure will be further explained in connection with embodiments below.

For the problem that the domain-level topology establishment method is incomplete in the related art, an embodiment of the present disclosure provides a unified method for establishing the domain-level topology, which involves path calculation based on the domain-level topology.

The embodiment of the disclosure may adopt the following technical solution: introducing a domain information advertisement capability for the BGP; defining link state data of BGP itself (which is different from the link state data of the IGP), and adding them to the domain advertisement information of the BGP; interacting the domain information between a BGP router or a BGP speaker, to establish the domain-level topology, and performing path calculation based on the domain-level topology.

The method for establishing the domain-level topology according to an embodiment of the present disclosure includes the following steps: step 1 to step 4.

### Step 1

In a BGP instance of a domain boundary node, a domain advertisement is configured to indicate that a domain information advertisement capability is enabled on this node. Then, local domain information is configured in a domain advertisement mode and corresponding policies are configured such that the local domain information and remote domain information received from other neighbors may be advertised or forwarded to a neighbor. Embodiments of the present disclosure assume that the policies are all matched, and do not distinguish and describe different policies for the technical solutions.

The locally configured domain information includes the following three items.
1) A domain ID to be selected, it refers to the domain ID of the domain to which the boundary node belongs, which may be globally unique. If the domain is an AS, it can be represented by an AS number; if the domain is an IGP area, it can be represented by (AS number, area ID).
2) Link information to be selected, it refers to unidirectional information of a link between a domain in which the domain boundary node located and a neighbor domain, that is, the reachability information of the domain to other domains. The complete unidirectional information of a link may include: a domain ID of the local end, a node ID of the local end (generally the router identifier, called router-id), an IP address or index of an interface of the local end (if the IP address of the interface is unknown, the index may be used), which may be expressed as local.domain-id.node-id.interface, and a domain ID of a peer end, a node-id of the peer end, an IP address or index of an interface of the peer end, which may be expressed as remote.domain-id.node-id.interface.
3) A set of optional nodes, which is IP addresses of a set of nodes that may be publicly available in the domain. These IP addresses may be used as destination addresses of a tunnel, such that an egress domain may be found according to the tunnel destination addresses. Multiple boundary nodes in a domain may expose the set of nodes, an aggregation of which is a set of nodes publicly available in the entire domain. For security reasons, the information may be configured in a special scenario (for example, multiple domains belong to a same operator).

In an embodiment, for security reasons, operators of some domains may not enable domain information advertisement capability on their domain boundary nodes. For a node that does not have the domain information advertisement capability enabled, it would not advertise its local domain information to a BGP neighbor actively, and it would also discard the domain information advertised by the BGP neighbor upon reception, and would not forward it to other BGP neighbors. In this embodiment, it is assumed that all the boundary nodes have the domain information advertisement capability enabled.

### Step 2

The domain boundary node may advertise, by using the BGP, its locally configured domain information to a BGP neighbor of the local domain, and forward the remote domain information received by it to the BGP neighbor of the local domain. The domain boundary node may also advertise, by using the BGP, its local domain information to a BGP neighbor of a neighbor domain, and forward the remote domain information received by it to the BGP neighbor of the neighbor domain.

In an embodiment, the domain boundary node forwarding the remote domain information received by it to the BGP neighbor of the neighbor domain may indicate a bidirectional connectivity of a link between domains. If the domain boundary node does not forward the remote domain information received by it to the BGP neighbor of the neighbor domain, the domain boundary node merely knows that its neighbor domains can reach other domains, but it does not know whether other domains can reach the neighbor domains and whether other domains are mutually reachable. This is similar to the IGP.

### Step 3

Each domain boundary node may generate a unified domain-level topology of the entire network according to its locally configured domain information and the received local domain information and remote domain information.

The domain boundary node may also advertise, by using the BGP, the local domain information and the remote domain information to the corresponding external PCE node of the domain, such that the external PCE may generate the domain-level topology.

In a hierarchical PCE architecture, for security reasons, one or more domain boundary nodes may choose neither to advertise the domain information to a BGP neighbor in a neighbor domain, nor to receive the domain information from a BGP neighbor. One or more domain boundary nodes may merely advertise the local domain information to a corresponding child-PCE of the local domain (or to the child-PCE through a Route Reflector (RR) in the domain), and then the child-PCE forward the information to a parent-PCE. That is, the parent-PCE maintains the domain-level topology of the entire network.

### Step 4

The PCE embedded in the domain boundary node (or the external PCE, or the parent-PCE in the hierarchical PCE architecture) determines a number of possible end-to-end domain sequences according to the PCC request and based on the domain-level topology. The method for determining the egress domain may be searching to find out whether a tail node of the path is in a set of publicly available nodes in one or more domains. If the query is successful, this domain is the egress domain. If the query fails, the egress domain may be determined in other manners, such as by configuration, the manners are not limited in this embodiment.

For each domain sequence, the method of further calculating the end-to-end path set (i.e., completing the path in each domain) may be the per-domain path calculation technology defined by RFC5152 or the reverse-recursion PCE calculation technology defined by RFC544, etc., which is not limited in this embodiment of the present disclosure.

Compared with the related art, the method described in the embodiments of the present disclosure has an application to a wider range of network architectures, and achieves a more unified domain topology establishment method.

The following is a description of (Type Length Value, TLV) format used in this embodiment. In this embodiment, merely the TLV format related to the fourth edition of the Internet Protocol, called IPv4, is introduced. In fact, the TLV format related to the sixth edition of the Internet Protocol, called IPv6, may also be similarly extended.

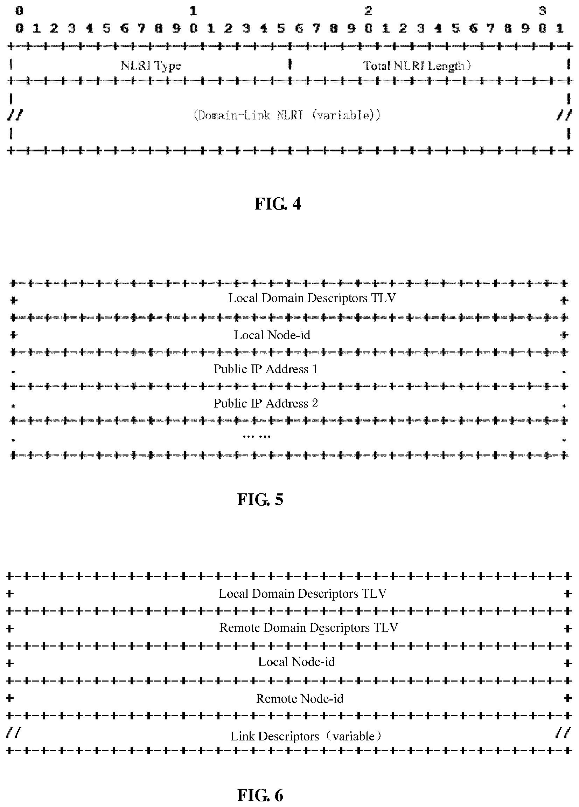

FIG. 4 is a diagram illustrating a format of a domain-link network layer reachability information, called domain-link NLRI, according to an embodiment of the present disclosure. As shown in FIG. 4, the domain-link NLRI format is a new NLRI added to the BGP protocol. The domain-link NLRI needs to use a new Address Family Identifier (AFI) or Subsequent Address Family Identifier (SAFI) encapsulation, such as AFI 16389/SAFI 72 encapsulation, to distinguish it from the existing definition of network layer reachable information (NLRI) in the BGP and BGP-LS.

The network layer reachable information type (NLRI type), has two kinds of value, which determines the content of the domain-link NLRI field.
Type 1: domain NLRI
Type 2: link NLRI

When the type is type 1, the content of the domain-link NLRI field is the domain network layer reachability information, called domain NLRI, and the domain NLRI is as shown in FIG. 5. FIG. 5 is a diagram illustrating a format of the domain NLRI according to an embodiment of the present disclosure. When the type is type 2, the content of the domain-link NLRI field is the link network layer reachability information, called link NLRI, and the link NLRI is as shown in FIG. 6. FIG. 6 is a diagram illustrating a format of the link NLRI according to an embodiment of the present disclosure.

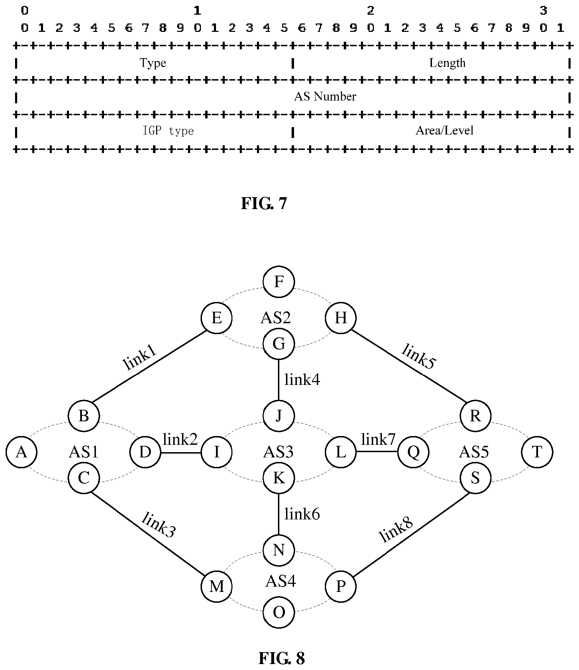

FIG. 7 is a diagram illustrating a format of a Local/Remote Domain Descriptors TLV according to an embodiment of the present disclosure. The Local Domain Descriptors TLV and the Remote Domain Descriptors TLV involved in FIG. 5 and FIG. 6 are both shown in FIG. 7. The format of the two may be the same, and the values of type thereof may be different. If the domain is an AS, the AS Number field needs to be set to a corresponding AS number, and the other fields are set to 0. If the domain is an IGP area, the AS Number field needs to be set to the AS to which the IGP area belongs, and then the internal gateway protocol type (IGP type) field is set to 1 (which indicating Open Shortest Path First Protocol, OSPF) or 2 (which indicating Intermediate System to Intermediate System Routing Protocol, ISIS), and the area/level field is set to a corresponding OSPF area ID or ISIS level number.

The Local Node-id in FIG. 5 is the IP address of the node, which is generally the router identifier router-id; the public IP address is an IP address publicly available in the domain, such that boundary nodes in other domains may determine a corresponding egress domain according to a tail node in a path to be calculated.

In FIG. 6, a node identifier of the local domain, called Local Node-id, and a node identifier of a remote domain, called Remote Node-id, indicate IP addresses of nodes at both ends of a link between domains.

The Link Descriptors in FIG. 6 describe the basic information of a link, which may include the local link identifier or the remote identifier, i.e., Link Local/Remote Identifiers (TLV Code Point 258), already defined in the BGP-LS (RFC7752) protocol, or IPv4 Interface Address (TLV Code Point 259) and IPv4 Neighbor Address (TLV Code Point 260).

The Link Descriptors in FIG. 6 also describes other attributes of the link, which may be TE attributes, or optionally include the Administrative group (color) (TLV Code Point 1088), or Maximum link bandwidth (TLV Code Point 1089), or Max. reservable link bandwidth (TLV Code Point 1090), or Unreserved bandwidth (TLV Code Point 1091), and TE Default Metric (TLV Code Point 1092) and so on, which are already defined in the BGP-LS protocol.

### Embodiment 6

This embodiment of the present disclosure describes the establishment, in a case where the domain is an AS, of a domain-level topology across ASs. FIG. 8 is a cross-domain diagram when the domain is an AS according to Embodiment 6 of the present disclosure. As shown in FIG. 8, five ASs are included, and boundary nodes of each AS connect with each other through a directly connected link and establish an External Border Gateway Protocol (EBGP) neighbor relationship, for example, a boundary node B of AS1 and a boundary node E of AS2 are connected through direct link link1, and an EBGP neighbor relationship is established between the node B and the node E. In addition, in an AS, an internal BGP (IBGP) neighbor relationship is established between each boundary node, for example, an IBGP neighbor relationship is established between the node A and the node B of the AS 1. In this embodiment, it can be predetermined that a name of a link between the two ASs are the same for both ASs. For example, for the node B, it is connected to the node E through link1, and for the node E, it is connected to the node E through link1. Additionally, the name of the link may refer to the interface IP address (or index) and other attributes corresponding to the link, and a name of a node may refer to a router-id of the node.

In this embodiment, a TE LSP is established across ASs. The head node of the TE LSP is node A, and the destination node is node T. It is assumed that each boundary node in an AS contains an embedded PCE function.

Optionally, at step S801, domain advertisement is configured on each boundary node in an AS, for example:

```
Configuration on node A:
   router bgp 1 //enter a BGP configuration mode, local AS number is 1
     address-family domain-link domain-link //enter a domain-link address family (AF) mode,
     this command is equivalent to enabling the
domain advertisement capability, and the same below.
        neighbor B remote-as 1 //establish an IBGP neighbor relationship with node B
        neighbor C remote-as 1 //establish an IBGP neighbor relationship with node C
        neighbor D remote-as 1 //establish an IBGP neighbor relationship with node D
        domain as 1 //enter a configuration mode of domain AS1
           public A //expose the router-id of node A to the public
```

```
    Configuration on node B:
   router bgp 1 //enter a BGP configuration mode, local AS number is 1
     address-family domain-link domain-link //enter a domain-link AF mode
        neighbor A remote-as 1 //establish an IBGP neighbor relationship with node A
        neighbor C remote-as 1 //establish an IBGP neighbor relationship with node C
        neighbor D remote-as 1 //establish an IBGP neighbor relationship with node D
        neighbor E remote-as 2 //establish an EBGP neighbor relationship with node E
        domain as 1 //enter a configuration mode of domain AS1
           public B //expose the router-id of node B to the public
           link from as1.B.link1 to as2.E.link1 //advertise the link1 with AS2 to the public
```

```
    Configuration on node C:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor B remote-as 1 //establish an IBGP neighbor relationship with node B
       neighbor D remote-as 1 //establish an IBGP neighbor relationship with node D
       neighbor M remote-as 4 //establish an EBGP neighbor relationship with node M
       domain as 1 //enter a configuration mode of domain AS1
          public C //expose the router-id of node C to the public
          link from as1.C.link3 to as4.M.link3 //advertise the link3 with AS4 to the public
```

```
    Configuration on node D:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor B remote-as 1 //establish an IBGP neighbor relationship with node B
       neighbor C remote-as 1 //establish an IBGP neighbor relationship with node C
       neighbor I remote-as 3 //establish an EBGP neighbor relationship with node I
       domain as 1 //enter a configuration mode of domain AS1
         public D //expose the router-id of node D to the public
         link from as1.D.link2 to as3.I.link2 //advertise the link2 with AS3 to the public
```

Similar configurations may be made to each boundary node in other ASs.

At step S802, the boundary nodes in each AS may advertise its locally configured domain information to its IBGP neighbors and EBGP neighbors, and may also forward the domain information received from other IBGP/EBGP neighbors to its IBGP neighbors and EBGP neighbors.

For example, the domain-link NLRI that node A advertises respectively to node B, node C, and node D for its locally configured domain information is:
as1.A.public{A}

In this way, after reception, node B (or node C, node D) knows that the domain (AS1 herein) in which it is located has a node A that needs to be exposed to the public. Node B (or node C, node D), on one hand, adds this information in its domain database maintained locally, and on the other hand, forwards the domain-link NLRI to BGP neighbors in other domain-link AFs without modifying the domain-link NLRI. If the domain-link NLRI is finally forwarded to node A, then node A will check to find that the domain-link NLRI is generated by itself (according to the keyword "as1.A") and will not continue to forward it.

Similarly, the domain-link NLRI that node B advertises to node A for its locally configured domain information is:

```
   as1.B.public{B}
   as1.B.link1 -> as2.E.link1
```

Node A adds the information described by the domain-link NLRI to its domain database maintained locally, and forwards the domain-link NLRI to BGP neighbors in other domain-link AFs without modifying the domain-link NLRI. If the domain-link NLRI is finally forwarded to node B, then node B will check to find that the domain-link NLRI is generated by itself (according to the keyword "as1.B") and will not continue to forward it.

By analogy, the domain database maintained on the boundary nodes in each AS will be able to include the interconnected relationships between the domains of the entire network, as well as basic attributes and TE attributes of the links between these domains.

At step S803, the node A initiates an establishment of a TE LSP to a destination node T, and the node A checks its domain database to find (or use other methods to determine) that the node T is in AS5, that is, the corresponding egress domain is AS5. Then node A selects a feasible domain sequence based on the constraints and other policies required to establish the TE LSP. For example, link1 could not be satisfied according to the bandwidth requirement, and the entire AS2 should be excluded according to the policy requirement. The feasible domain sequences are:

```
   A---AS1---D---link2---I---AS3---L---link7---Q---AS5---T
   A---AS1---D---link2---I---AS3---K---link6---N---AS4---P---link8---S---AS5---T
   A---AS1---C---link3---M---AS4---P---link7---S---AS5---T
   A---AS1---C---link3---M---AS4---N---link6---K---AS3---L---link7---Q---AS5---T
```

At step S804, for each domain sequence, an optional end-to-end path is calculated according to the per-domain path calculation technology defined by RFC5152 or the reverse-recursion PCE calculation technology defined by RFC544. Then, a path is selected among the optional end-to-end paths corresponding to all domain sequences.

### Embodiment 7

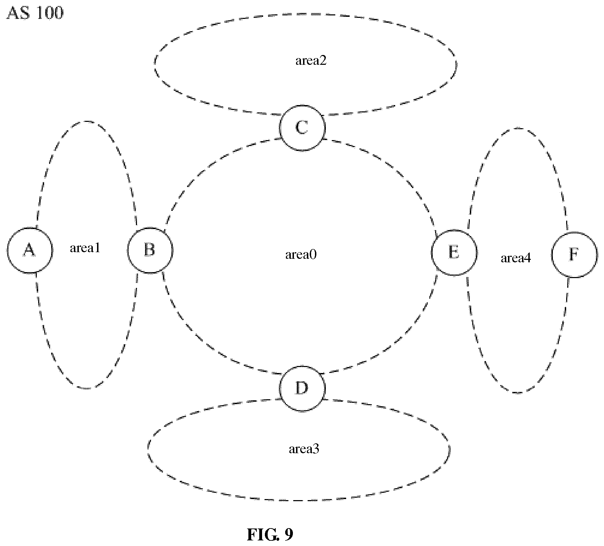

This embodiment describes the establishment, in a case where the domain is an OSPF area, of a domain-level topology across areas. FIG. 9 is a cross-domain diagram when the domain is an OSPF area, according to an embodiment of the present disclosure. As shown in FIG. 9, five areas are included, and an IBGP neighbor relationship is established between multiple boundary nodes in each area, for example, an IBGP neighbor relationship is established between node A and node B in areal. Other configurations in this embodiment are the same as in Embodiment 6.

In this embodiment, a TE label switching path (TE LSP) is established across the areas. The head node of the TE LSP is node A, and the destination node is node F. It is assumed that each boundary node in an area contains an embedded PCE function. Optionally, at step S901, domain advertisement is configured on each boundary node in the area, for example:

```
    Configuration on node A:
   router bgp 100 //enter a BGP configuration mode, local AS number is 100
     address-family domain-link domain-link //enter a domain-link AF mode
       neighbor B remote-as 100 //establish an IBGP neighbor relationship with node B
       domain as 100 area 1//enter a configuration mode of domain as100.area1
          public A //expose the router-id of node A to the public
```

```
Configuration on node B:
   router bgp 100 //enter a BGP configuration mode, local AS number is 100
     address-family domain-link domain-link //enter a domain-link AF mode
        neighbor A remote-as 100 //establish an IBGP neighbor relationship with node A
        neighbor C remote-as 100 //establish an IBGP neighbor relationship with node C
        neighbor D remote-as 100 //establish an IBGP neighbor relationship with node D
        neighbor E remote-as 100 //establish an IBGP neighbor relationship with node E
        domain as 100 area1//enter a configuration mode of domain as100.area1
           public B //expose the router-id of node B to the public
           virtual-link from area1.B to area0.B //advertise the virtual link with area0 (the cost
           of the virtual link is small by default, for example, 0, and the same below)
      domain as 100 area 0 //enter a configuration mode of domain as100.area0
          public B //expose the router-id of node B to the public
          virtual-link from area0.B to area1.B //advertise the virtual link with areal
```

Similar configurations may be made to each boundary node in other areas.

At step S902, the boundary nodes in each area may advertise its locally configured domain information to its IBGP neighbors, and may also forward the domain information received from other IBGP neighbors to its IBGP neighbors.

For example, the domain-link NLRI that node A advertises to node B for its locally configured domain information is:
as100.area1.A.public{A}

In this way, after reception, node B knows that the domain (as100.area1 herein) in which it is located has a node A that needs to be exposed to the public. Node B, on one hand, adds this information in its domain database maintained locally, and on the other hand, forwards the domain-link NLRI to BGP neighbors in other domain-link AFs without modifying the domain-link NLRI. If the domain-link NLRI is finally forwarded to node A, then node A will check to find that the domain-link NLRI is generated by itself (according to the keyword "as100.area1.A") and will not continue to forward it.

Similarly, the domain-link NLRI that node B advertises to node A for its locally configured domain information is:
as100.area1.B.public{B}
as100.area1.B.vlink -> as100.area0.B.vlink
as100.area0.B.public{B}
as100.area0.B.vlink -> as100.area1.B.vlink

Node A adds the information described by the domain-link NLRI to its domain database maintained locally, and forwards the domain-link NLRI to BGP neighbors in other domain-link AFs without modifying the domain-link NLRI. If the domain-link NLRI is finally forwarded to node B, then node B will check to find that the domain-link NLRI is generated by itself (according to the keyword "as100.area1.B or as100.area0.B") and will not continue to forward it.

By analogy, the domain database maintained on the boundary nodes in each area will be able to include the interconnected relationships between the domains of the entire network, as well as basic attributes and TE attributes of the links between these domains.

At step S903, the node A initiates an establishment of a TE LSP to a destination node F, and the node A checks its domain database to find (or use other methods to determine) that the node F is in as100.area4. Then node A selects a feasible domain sequence based on the constraints and other policies required to establish the TE LSP. For example, the feasible domain sequence may be:
A---AS100.area1---B---vlink---B---AS100.area0---E---vlink---E---AS100.area4---F

At step S904, for each domain sequence, an optional end-to-end path is calculated according to the per-domain path calculation technology defined by RFC5152 or the reverse-recursion PCE calculation technology defined by RFC544. Then, a path is selected among the optional end-to-end paths corresponding to all domain sequences.

### Embodiment 8

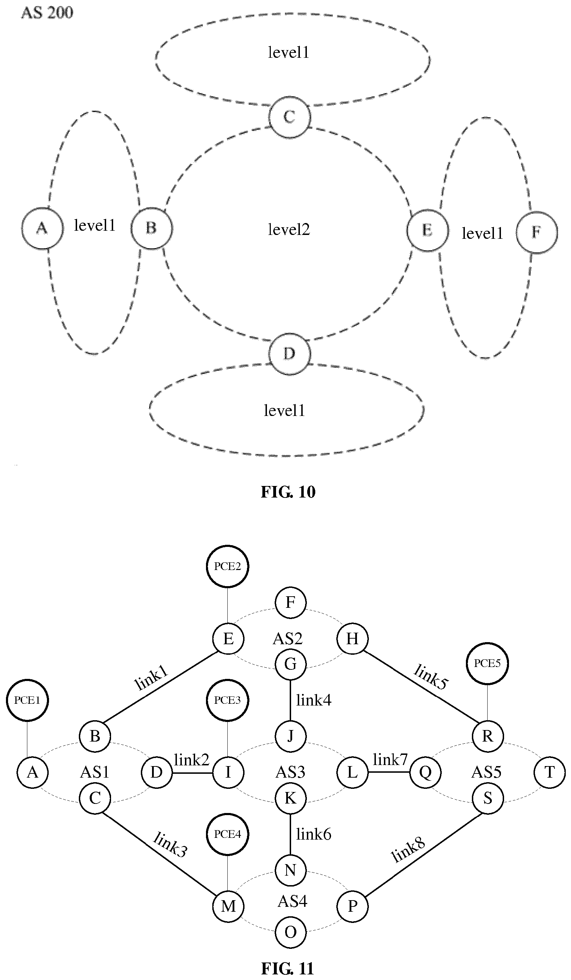

This embodiment describes the establishment, in a case where the domain is an ISIS level, of a domain-level topology across levels. FIG. 10 is a cross-domain diagram when the domain is an ISIS level, according to an embodiment of the present disclosure. As shown in FIG. 10, five levels are included, and an IBGP neighbor relationship is established between multiple boundary nodes in each level, for example, an IBGP neighbor relationship is established between node A and node B in a leftmost level. Other configurations in this embodiment are the same as in the above embodiment.

In this embodiment, a TE LSP is established across levels. The head node of the TE LSP is node A, and the destination node is node F. It is assumed that each boundary node in a level contains an embedded PCE function. Optionally, at step S1001, domain advertisement is configured on each boundary node of the level, for example:

```
    Configuration on node A:
   router bgp 200 //enter a BGP configuration mode, local AS number is 200
     address-family domain-link domain-link //enter a domain-link AF mode
       neighbor B remote-as 200 //establish an IBGP neighbor relationship with node B
       domain as 200 level 1//enter a configuration mode of domain as200.level1
          public A //expose the router-id of node A to the public
```

```
    Configuration on node B:
   router bgp 200 //enter a BGP configuration mode, local AS number is 200
     address-family domain-link domain-link //enter a domain-link AF mode
       neighbor A remote-as 200 //establish an IBGP neighbor relationship with node A
       neighbor C remote-as 200 //establish an IBGP neighbor relationship with node C
       neighbor D remote-as 200 //establish an IBGP neighbor relationship with node D
       neighbor E remote-as 200 //establish an IBGP neighbor relationship with node E
       domain as 200 level 1//enter a configuration mode of domain as200.level1
         public B //expose the router-id of node B to the public
         virtual-link from level1.B to level2.B //advertise the virtual link with level2
   domain as 200 level 2//enter a configuration mode of domain as200.level2
         public B //expose the router-id of node B to the public
         virtual-link from level2.B to level1.B //advertise the virtual link with level1
```

Similar configurations may be made to each boundary node in other levels.

At step S1002, the boundary nodes in each level may advertise its locally configured domain information to its IBGP neighbors, and may also forward the domain information received from other IBGP neighbors to its IBGP neighbors.

For example, the domain-link NLRI that node A advertises to node B for its locally configured domain information is:
as200.1evel1.A.public{A}

In this way, after reception, node B knows that the domain (as200.level1 herein) in which it is located has a node A that needs to be exposed to the public. Node B, on one hand, adds this information in its domain database maintained locally, and on the other hand, forwards the domain-link NLRI to BGP neighbors in other domain-link AFs without modifying the domain-link NLRI. If the domain-link NLRI is finally forwarded to node A, then node A will check to find that the domain-link NLRI is generated by itself (according to the keyword "as200.level1.A") and will not continue to forward it.

Similarly, the domain-link NLRI that node B advertises to node A for its locally configured domain information is:

```
   as200.level1.B.public{B}
   as200.level1.B.vlink -> as200.level2.B.vlink
   as200.level2.B.public{B}
   as200.level2.B.vlink -> as200.level1.B.vlink
```

Node A adds the information described by the domain-link NLRI to its domain database maintained locally, and forwards the domain-link NLRI to BGP neighbors in other domain-link AFs without modifying the domain-link NLRI. If the domain-link NLRI is finally forwarded to node B, then node B will check to find that the domain-link NLRI is generated by itself (according to the keyword "as200.level1.B or as200.level2.B") and will not continue to forward it.

By analogy, the domain database maintained on the boundary nodes in each level will be able to include the interconnected relationships between the domains of the entire network, as well as basic attributes and TE attributes of the links between these domains.

At step S1003, the node A initiates an establishment of a TE LSP to a destination node F, and the node A checks its domain database to find (or use other methods to determine) that the node F is in an autonomous system AS200.level1, that is, the corresponding egress domain is as200.level1. Then node A selects a feasible domain sequence based on the constraints and other policies required to establish the TE LSP. For example, the feasible domain sequence may be:

```
   A---AS200.level1---F
   A---AS200.level1---B---vlink---B---AS200.level2---C---vlink---C---AS200.level1---F
   A---AS200.level1---B---vlink---B---AS200.level2---D---vlink---D---AS200.level1---F
   A---AS200.level1---B---vlink---B---AS200.level2---E---vlink---E---AS200.level1---F
    
```

In fact, the node A may check to find that the destination the node F is not in the ISIS IGP topology of local level1 in which the node A is located, thus the above domain sequence "A---AS200.level1---F" may be excluded. Additionally, the above domain sequence "A---AS200.level1---B---vlink---B---AS200.level2---C---vlink---C ---AS200.level1---F" and the domain sequence "A---AS200.level1---B---vlink---B ---AS200.level2---D---vlink---D---AS200.level1---F" would cause failure when calculating the end-to-end path in the next step, i.e., only the domain sequence "A---AS200.level1---B---vlink---B---AS200.level2---E---vlink---E---AS200.level1-F" may cause successful calculation.

At step S904, for each domain sequence, an optional end-to-end path is calculated according to the per-domain path calculation technology defined by RFC5152 or the reverse-recursion PCE calculation technology defined by RFC544. Then, a path is selected among the optional end-to-end paths corresponding to all domain sequences.

### Embodiment 9

There is a small difference between this embodiment and Embodiment 6. FIG. 11 is a cross-domain diagram when the domain is an AS with an external PCE according to Embodiment 9 of the present disclosure, as shown in FIG. 11, it is assumed that each boundary node has an external PCE instead of an embed PCE. In this embodiment, each boundary node (or a RR node) in each AS establishes a BGP neighbor relationship with a PCE corresponding to the AS, and advertises the domain information of the AS to the PCE and forwards the domain information of other ASs. The process of maintaining the domain database on the corresponding external PCE of each AS and determining the domain sequence based on the domain database is the same with that in Embodiment 6 where the PCE is embedded in each AS boundary node, and the details will not be repeated herein again.

### Embodiment 10

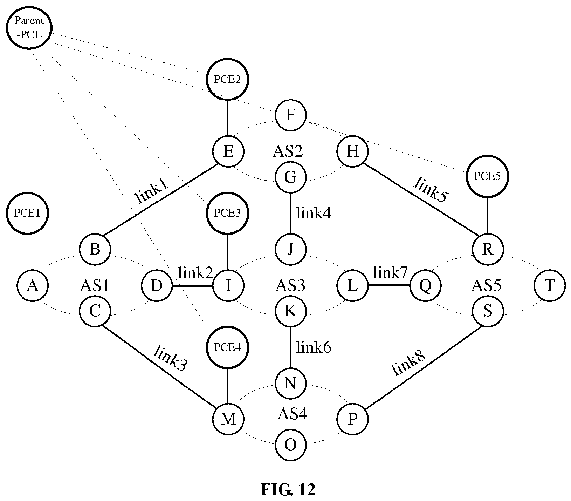

There is a small difference between this embodiment and Embodiment 9, and this embodiment employs a hierarchical PCE architecture. FIG. 12 is a cross-domain diagram for a hierarchical PCE according to an embodiment of the present disclosure. The reason for employing the hierarchical PCE architecture is that multiple ASs belong to different service providers, and for confidentiality reasons, one or more service providers do not agree to flood the information of links connecting this AS to a neighbor AS to other non-neighbor ASs by using the BGP, while all the service providers agree to synchronize the information of links between ASs to a parent-PCE of a third party.

In this embodiment, a boundary node in each AS establishes an IBGP neighbor relationship with merely the other boundary nodes in the AS, and merely advertises the local domain information of the AS between IBGP neighbors. The boundary node (or RR node) in each AS also establishes a BGP neighbor relationship with a child-PCE corresponding to the AS, and advertises the domain information of the AS to the child-PCE by using BGP. The corresponding child-PCE of each AS may forward the domain information to the parent-PCE (a policy may be configured to forward merely to the parent-PCE, and not to forward to the boundary node or RR node in the AS), and may also maintain the domain database (including local AS related information). The parent-PCE will collect the domain information of the entire network. Optionally, at step S1201, domain advertisement is configured on each boundary node in the AS, for example:

```
    Configuration on node A:
   router bgp 1 //enter a BGP configuration mode, local AS number is 1
     address-family domain-link domain-link //enter a domain-link AF mode
       neighbor B remote-as 1 //establish an IBGP neighbor relationship with node B
       neighbor C remote-as 1 //establish an IBGP neighbor relationship with node C
       neighbor D remote-as 1 //establish an IBGP neighbor relationship with node D
       neighbor PCE1 remote-as 1 //establish an IBGP neighbor relationship with node PCE1
       domain as 1 //enter a configuration mode of domain AS1
         public A //expose the router-id of node A to the public
```

```
    Configuration on node B:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor C remote-as 1 //establish an IBGP neighbor relationship with node C
       neighbor D remote-as 1 //establish an IBGP neighbor relationship with node D
       domain as 1 //enter a configuration mode of domain AS1
         public B //expose the router-id of node B to the public
         link from as1.B.link1 to as2.E.link1 //advertise the link1 with AS2
```

```
    Configuration on node C:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor B remote-as 1 //establish an IBGP neighbor relationship with node B
       neighbor D remote-as 1 //establish an IBGP neighbor relationship with node D
       domain as 1 //enter a configuration mode of domain AS1
         public C //expose the router-id of node C to the public
         link from as1.C.link3 to as4.M.link3 //advertise the link link3 with AS4
```

```
Configuration on node D:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor B remote-as 1 //establish an IBGP neighbor relationship with node B
       neighbor C remote-as 1 //establish an IBGP neighbor relationship with node C
       domain as 1 //enter a configuration mode of domain AS1
         public D //expose the router-id of node D to the public
         link from as1.D.link2 to as3.I.link2 //advertise the link link2 with AS3
```

```
    Configuration on node PCE1:
   router bgp 1 //enter a BGP configuration mode, local AS number is 1
     address-family domain-link domain-link //enter a domain-link AF mode
       neighbor A remote-as 1 //establish an IBGP neighbor relationship with node A
       neighbor PCE-parent remote-as 10 //establish an EBGP neighbor relationship with PCE
       parent
```

Similar configurations may be made to each boundary node in other ASs.

At step S1202, the boundary nodes in each AS advertises its local configured domain information to its IBGP neighbors, and may also forward the domain information it receives from other IBGP neighbors to its IBGP neighbors.

For example, the domain-link NLRI that node A advertises to node B, node C, and node D for its locally configured domain information is:
as1.A.public{A}

In this way, after reception, node B (or node C, node D, node PCE1) knows that the domain (AS1 herein) in which it is located has a node A that needs to be exposed to the public. Node B (or node C, node D, node PCE1), on one hand, adds this information in its domain database maintained locally, and on the other hand, forwards the domain-link NLRI to BGP neighbors in other domain-link AFs without modifying the domain-link NLRI. If the domain-link NLRI is finally forwarded to node A, then node A will check to find that the domain-link NLRI is generated by itself (according to the keyword "as1.A") and will not continue to forward it.

Similarly, the domain-link NLRI that node B advertises to node A for its locally configured domain information is:

```
   as1.B.public{B}
   as1.B.link1 -> as2.E.link1
```

Node A adds the information described by the domain-link NLRI to its domain database maintained locally, and forwards the domain-link NLRI to BGP neighbors in other domain-link AFs without modifying the domain-link NLRI. If the domain-link NLRI is finally forwarded to node B, then node B will check to find that the domain-link NLRI is generated by itself (according to the keyword "as1.B") and will not continue to forward it.

By analogy, the domain database maintained on the boundary nodes in each AS and the child-PCE corresponding to the AS will be able to include the interconnected relationships between this AS and neighbor ASs, as well as basic attributes and TE attributes of the links between this AS and neighbor ASs. The domain database maintained on the parent-PCE includes the interconnected relationships between ASs of the entire network, as well as basic attributes and TE attributes of the links between these ASs.

At step S1203, the node A initiates an establishment of a TE LSP to a destination node T; the node A initiates an request to PCE1; the PCE1 determines that the destination node T does not belong to AS1, and the PCE1 initiates a path calculation request to the parent-PCE; the parent-PCE determines that the destination node T belongs to AS5; the parent-PCE selects a feasible domain sequence according to constraints and other policies required to establish the TE LSP. For example, link1 could not satisfy a bandwidth requirement, and according to a policy requirement, the entire AS2 should be excluded. The feasible domain sequence is:

```
   A---AS1---D---link2---I---AS3---L---link7---Q---AS5---T
   A---AS1---D---link2---I---AS3---K---link6---N---AS4---P---link8---S---AS5---T
   A---AS1---C---link3---M---AS4---P---link7---S---AS5---T
   A---AS1---C---link3---M---AS4---N---link6---K---AS3---L---link7---Q- --AS5---T
```

At step S 1204, for each domain sequence, the parent-PCE may initiate a request to calculate a path in each domain to the child-PCEs corresponding to each domain in the domain sequence, and aggregate the paths into a set of plurality of end-to-end paths, and then select an optional end-to-end path from the set, and return it to PCE1. The parent-PCE may also simply return the domain sequences to PCE1, which calculates an optional end-to-end path according to the per-domain path calculation technology defined by RFC5152 or the reverse-recursion PCE calculation technology defined by RFC544. Then, a path is selected among the optional end-to-end paths corresponding to all domain sequences.

It will be apparent to those skilled in the art that, each of the above-described modules or steps of the present disclosure may be implemented by a general-purpose computing device, which may be integrated on a single computing device or distributed across a network consisted of multiple computing devices. Optionally, they may be implemented by program code executable by the computing device such that they may be stored in a storage device for execution by the computing device; in the related art, the steps shown or described may be performed in an order different from the order herein, or they may be implemented by fabrication into one or more integrated circuit modules, or many of modules or steps thereof may be implemented by fabrication into a single integrated circuit module. Thus, the disclosure is not limited to any specific combination of hardware and software.

The embodiments above are merely optional embodiments of the disclosure and are not intended to limit the disclosure; the scope of the invention is defined by the appended claims.

### Industrial applicability

According to embodiments of the disclosure, the problem that the domain-level topology establishment method is incomplete in the related art can be solved, and thus the domain-level topology establishment method is unified.

## Claims

1. A method for establishing a domain-level topology, comprising:
acquiring (S102), by a first boundary node, domain information of boundary nodes in at least two domains, wherein the first boundary node is in one of the at least two domains, and the at least two domains comprise non-adjacent domains; and
establishing (S104), by the first boundary node, the domain-level topology comprising the at least two domains according to the domain information of the boundary nodes in the at least two domains,
wherein the domain information of the boundary node comprises: a domain identification, called ID, of a domain to which the boundary node belongs, and link information between a specified domain and the domain to which the boundary node belongs, the specified domain is a domain adjacent to the domain to which the boundary node belongs, and
wherein the link information comprises: the domain ID of the domain to which the boundary node belongs, a node ID of the boundary node, an interface Internet Protocol, called IP, address or an interface index of the boundary node, a domain ID of the specified domain, an ID of a node adjacent to the boundary node and in the specified domain, and an interface IP address or an interface index of the node adjacent to the boundary node and in the specified domain.

2. The method of claim 1, wherein the acquiring (S102), by the first boundary node, the domain information of the boundary nodes in the at least two domains comprises:
acquiring, by the first boundary node, configured domain information, and acquiring the domain information of boundary nodes in the at least two domains except the first boundary node, by using a border gateway protocol, called BGP.

3. The method of claim 2, wherein the acquiring, by the first boundary node, the domain information of boundary nodes in the at least two domains except the first boundary node by using the BGP comprises:
acquiring, by the first boundary node, the domain information transmitted by a first specified neighbor node of the first boundary node, by using the BGP,
wherein the first specified neighbor node of the first boundary node comprises at least one of: a boundary node in a domain to which the first boundary node belongs except the first boundary node, and a boundary node adjacent to the first boundary node and in a domain adjacent to the domain to which the first boundary node belongs.

4. The method of claim 1 or 3, further comprising:
transmitting, by the first boundary node, the domain information and specified information of the first boundary node to a second specified neighbor node of the first boundary node by using the BGP,
wherein the specified information is domain information received by the first boundary node and transmitted from neighbor nodes of the first boundary node except the second specified neighbor node, and
wherein the second specified neighbor node comprises at least one of: a boundary node in a domain to which the first boundary node belongs except the first boundary node, and a boundary node adjacent to the first boundary node and in a domain adjacent to the domain to which the first boundary node belongs.

5. The method of claim 1, wherein the boundary nodes in the at least two domains are boundary nodes configured with a domain information advertisement capability in the at least two domains.

6. The method of claim 1, wherein the domain information of the boundary node further comprises: a set of publicly available IP addresses in the domain to which the boundary node belongs.

7. The method of claim 1, after the acquiring (S102), by the first boundary node, the domain information of the boundary nodes in the at least two domains, further comprising:
storing, by the first boundary node, the domain information of the boundary nodes in the at least two domains.

8. The method of claim 1 or 7, after the establishing (S104), by the first boundary node, the domain-level topology comprising the at least two domains according to the domain information of the boundary nodes in the at least two domains, further comprising:
receiving, by the first boundary node, request information transmitted by a Path Calculation Client, called PCC, for requesting to establish a path from the first boundary node to a specified destination node, wherein the specified destination node comprises one of: a boundary node in the domain-level topology except the first boundary node, a boundary node corresponding to a publicly available IP address in the domain-level topology except the first boundary node, and wherein the request information comprises at least the following information: an IP address of the first boundary node, an IP address of the specified destination node, and a constraint for path calculation; and
determining a domain sequence from the first boundary node to the specified destination node, according to the domain-level topology and the request information.

9. The method of claim 1, further comprising: embedding a Path Computation Element, called PCE, on the first boundary node, or configuring an external PCE outside a domain to which the first boundary node belongs,
wherein in a case where the external PCE outside the domain to which the first boundary node belongs is configured, the establishing, by the first boundary node, the domain-level topology according to the domain information of the boundary nodes in the at least two domains comprises:
transmitting, by the first boundary node, acquired domain information of the boundary nodes in the at least two domains to the external PCE, such that the external PCE establishes the domain-level topology according to the domain information of the boundary nodes in the at least two domains.

10. A device for establishing a domain-level topology, applied in a first boundary node, comprising:
an acquiring module (22) configured to acquire domain information of boundary nodes in at least two domains, wherein the first boundary node is in one of the at least two domains, and the at least two domains comprise non-adjacent domains; and
an establishing module (24) configured to establish the domain-level topology comprising the at least two domains according to the domain information of the boundary nodes in the at least two domains,
wherein the domain information of the boundary node comprises: a domain identification, called ID, of a domain to which the boundary node belongs, and link information between a specified domain and the domain to which the boundary node belongs, the specified domain is a domain adjacent to the domain to which the boundary node belongs, and
wherein the link information comprises: the domain ID of the domain to which the boundary node belongs, a node ID of the boundary node, an interface Internet Protocol, called IP, address or an interface index of the boundary node, a domain ID of the specified domain, an ID of a node adjacent to the boundary node and in the specified domain, and an interface IP address or an interface index of the node adjacent to the boundary node and in the specified domain.

11. A node, comprising:
a processor (32) configured to: acquire domain information of boundary nodes in at least two domains, and establish the domain-level topology comprising the at least two domains according to the domain information of the boundary nodes in the at least two domains, wherein the node is a first boundary node in one of the at least two domains, and the at least two domains comprise non-adjacent domains; and
a memory (34) configured to be coupled to the processor (32),
wherein the domain information of the boundary node comprises: a domain identification, called ID, of a domain to which the boundary node belongs, and link information between a specified domain and the domain to which the boundary node belongs, the specified domain is a domain adjacent to the domain to which the boundary node belongs, and
wherein the link information comprises: the domain ID of the domain to which the boundary node belongs, a node ID of the boundary node, an interface Internet Protocol, called IP, address or an interface index of the boundary node, a domain ID of the specified domain, an ID of a node adjacent to the boundary node and in the specified domain, and an interface IP address or an interface index of the node adjacent to the boundary node and in the specified domain.

12. A network system, comprising: at least two domains, and a plurality of boundary nodes belonging to the at least two domains, wherein the at least two domains comprise non-adjacent domains,
each of the plurality of boundary nodes functions as a first boundary node, and is configured to acquire domain information of the boundary nodes in the at least two domains, and establish a domain-level topology comprising the at least two domains according to the domain information of the boundary nodes in the at least two domains,
wherein the domain information of the boundary node comprises: a domain identification, called ID, of a domain to which the boundary node belongs, and link information between a specified domain and the domain to which the boundary node belongs, the specified domain is a domain adjacent to the domain to which the boundary node belongs, and
wherein the link information comprises: the domain ID of the domain to which the boundary node belongs, a node ID of the boundary node, an interface Internet Protocol, called IP, address or an interface index of the boundary node, a domain ID of the specified domain, an ID of a node adjacent to the boundary node and in the specified domain, and an interface IP address or an interface index of the node adjacent to the boundary node and in the specified domain.

13. A storage medium, comprising a stored program, wherein a device in which the storage medium is located is controlled to implement the method of any of claims 1 to 9 when the program is executed.

## Patentansprüche

1. Verfahren zum Einrichten einer Topologie auf Domänenebene, Folgendes umfassend:
Erfassen (S102), durch einen ersten Grenzknoten, von Domäneninformationen von Grenzknoten in mindestens zwei Domänen, wobei sich der erste Grenzknoten in einer der mindestens zwei Domänen befindet und die mindestens zwei Domänen nicht benachbarte Domänen umfassen; und
Einrichten (S104), durch den ersten Grenzknoten, der Topologie auf Domänenebene, die die mindestens zwei Domänen umfasst, gemäß den Domäneninformationen der Grenzknoten in den mindestens zwei Domänen,
wobei die Domäneninformationen des Grenzknotens Folgendes umfassen: eine Domänenidentifikation, ID genannt, einer Domäne, zu der der Grenzknoten gehört, und Link-Informationen zwischen einer spezifizierten Domäne und der Domäne, zu der der Grenzknoten gehört, wobei die spezifizierte Domäne eine Domäne ist, die der Domäne benachbart ist, zu der der Grenzknoten gehört, und
wobei die Link-Informationen Folgendes umfassen: die Domänen-ID der Domäne, zu der der Grenzknoten gehört, eine Knoten-ID des Grenzknotens, eine Schnittstellen-Internet-Protokolladresse, IP-Adresse genannt, oder einen Schnittstellenindex des Grenzknotens, eine Domänen-ID der spezifizierten Domäne, eine ID eines Knotens, der dem Grenzknoten benachbart ist und in der spezifizierten Domäne ist, und eine Schnittstellen-IP-Adresse oder einen Schnittstellenindex des Knotens, der dem Grenzknoten benachbart ist und in der spezifizierten Domäne ist.

2. Verfahren nach Anspruch 1, wobei das Erfassen (S102), durch den ersten Grenzknoten, der Domäneninformationen der Grenzknoten in den mindestens zwei Domänen Folgendes umfasst:
Erfassen, durch den ersten Grenzknoten, von konfigurierten Domäneninformationen und Erfassen der Domäneninformationen von Grenzknoten in den mindestens zwei Domänen außer dem ersten Grenzknoten, unter Verwendung eines Grenz-Gateway-Protokolls, BGP genannt.

3. Verfahren nach Anspruch 2, wobei das Erfassen, durch den ersten Grenzknoten, der Domäneninformationen von Grenzknoten in den mindestens zwei Domänen mit Ausnahme des ersten Grenzknotens unter Verwendung des BGP Folgendes umfasst:
Erfassen, durch den ersten Grenzknoten, der Domäneninformationen, die durch einen ersten spezifizierten Nachbarknoten des ersten Grenzknotens übertragen werden, unter Verwendung des BGP,
wobei der erste spezifizierte Nachbarknoten des ersten Grenzknotens mindestens eines von Folgendem umfasst: einen Grenzknoten in einer Domäne, zu der der erste Grenzknoten gehört, mit Ausnahme des ersten Grenzknotens, und einen Grenzknoten, der dem ersten Grenzknoten benachbart ist und in einer Domäne ist, die der Domäne benachbart ist, zu der der erste Grenzknoten gehört.

4. Verfahren nach Anspruch 1 oder 3, ferner Folgendes umfassend:
Übertragen, durch den ersten Grenzknoten, der Domäneninformationen und spezifizierten Informationen des ersten Grenzknotens an einen zweiten spezifizierten Nachbarknoten des ersten Grenzknotens unter Verwendung des BGP,
wobei die spezifizierten Informationen Domäneninformationen sind, die durch den ersten Grenzknoten empfangen wurden und von Nachbarknoten des ersten Grenzknotens mit Ausnahme des zweiten spezifizierten Nachbarknotens übertragen wurden, und
wobei der zweite spezifizierte Nachbarknoten mindestens eines von Folgendem umfasst: einen Grenzknoten in einer Domäne, zu der der erste Grenzknoten gehört, mit Ausnahme des ersten Grenzknotens, und einen Grenzknoten, der dem ersten Grenzknoten benachbart ist und in einer Domäne ist, die der Domäne benachbart ist, zu der der erste Grenzknoten gehört.

5. Verfahren nach Anspruch 1, wobei die Grenzknoten in den mindestens zwei Domänen Grenzknoten sind, die mit einer Domäneninformationen-Ankündigungsfähigkeit in den mindestens zwei Domänen konfiguriert sind.

6. Verfahren nach Anspruch 1, wobei die Domäneninformationen des Grenzknotens ferner Folgendes umfassen: einen Satz öffentlich verfügbarer IP-Adressen in der Domäne, zu der der Grenzknoten gehört.

7. Verfahren nach Anspruch 1, nach dem Erfassen (S102), durch den ersten Grenzknoten, der Domäneninformationen der Grenzknoten in den mindestens zwei Domänen ferner Folgendes umfassend:
Speichern, durch den ersten Grenzknoten, der Domäneninformationen der Grenzknoten in den mindestens zwei Domänen.

8. Verfahren nach Anspruch 1 oder 7, nach dem Einrichten (S104), durch den ersten Grenzknoten, der Topologie auf Domänenebene, die die mindestens zwei Domänen umfasst, gemäß den Domäneninformationen der Grenzknoten in den mindestens zwei Domänen ferner Folgendes umfassend:
Empfangen, durch den ersten Grenzknoten, von Anforderungsinformationen, die durch einen Pfadberechnungs-Client, PCC genannt, übertragen werden, zum Anfordern, einen Pfad von dem ersten Grenzknoten zu einem spezifizierten Zielknoten einzurichten, wobei der spezifizierte Zielknoten eines von Folgendem umfasst: einen Grenzknoten in der Topologie auf Domänenebene mit Ausnahme des ersten Grenzknotens, einen Grenzknoten, der einer öffentlich verfügbaren IP-Adresse in der Topologie auf Domänenebene mit Ausnahme des ersten Grenzknotens entspricht, und wobei die Anforderungsinformationen mindestens die folgenden Informationen umfassen: eine IP-Adresse des ersten Grenzknotens, eine IP-Adresse des spezifizierten Zielknotens und eine Beschränkung für eine Pfadberechnung; und
Bestimmen einer Domänensequenz von dem ersten Grenzknoten zu dem spezifizierten Zielknoten gemäß der Topologie auf Domänenebene und den Anforderungsinformationen.

9. Verfahren nach Anspruch 1, ferner Folgendes umfassend: Einbetten eines Pfadberechnungselements, PCE genannt, auf dem ersten Grenzknoten oder Konfigurieren eines externen PCE außerhalb einer Domäne, zu der der erste Grenzknoten gehört,
wobei in einem Fall, in dem das externe PCE außerhalb der Domäne konfiguriert ist, zu der der erste Grenzknoten gehört, das Einrichten, durch den ersten Grenzknoten, der Topologie auf Domänenebene gemäß den Domäneninformationen der Grenzknoten in den mindestens zwei Domänen Folgendes umfasst:
Übertragen, durch den ersten Grenzknoten, von erfassten Domäneninformationen der Grenzknoten in den mindestens zwei Domänen an das externe PCE, so dass das externe PCE die Topologie auf Domänenebene gemäß den Domäneninformationen der Grenzknoten in den mindestens zwei Domänen einrichtet.

10. Vorrichtung zum Einrichten einer Topologie auf Domänenebene, die in einem ersten Grenzknoten angewendet wird, Folgendes umfassend:
ein Erfassungsmodul (22), das dazu ausgelegt ist, Domäneninformationen von Grenzknoten in mindestens zwei Domänen zu erfassen, wobei sich der erste Grenzknoten in einer der mindestens zwei Domänen befindet und die mindestens zwei Domänen nicht benachbarte Domänen umfassen; und
ein Einrichtungsmodul (24), das dazu ausgelegt ist, die Topologie auf Domänenebene, die die mindestens zwei Domänen umfasst, gemäß den Domäneninformationen der Grenzknoten in den mindestens zwei Domänen einzurichten, wobei die Domäneninformationen des Grenzknotens Folgendes umfassen: eine Domänenidentifikation, ID genannt, einer Domäne, zu der der Grenzknoten gehört, und Link-Informationen zwischen einer spezifizierten Domäne und der Domäne, zu der der Grenzknoten gehört, wobei die spezifizierte Domäne eine Domäne ist, die der Domäne benachbart ist, zu der der Grenzknoten gehört, und
wobei die Link-Informationen Folgendes umfassen: die Domänen-ID der Domäne, zu der der Grenzknoten gehört, eine Knoten-ID des Grenzknotens, eine Schnittstellen-Internet-Protokolladresse, IP-Adresse genannt, oder einen Schnittstellenindex des Grenzknotens, eine Domänen-ID der spezifizierten Domäne, eine ID eines Knotens, der dem Grenzknoten benachbart ist und in der spezifizierten Domäne ist, und eine Schnittstellen-IP-Adresse oder einen Schnittstellenindex des Knotens, der dem Grenzknoten benachbart ist und in der spezifizierten Domäne ist.

11. Knoten, Folgendes umfassend:
einen Prozessor (32), der ausgelegt ist, um: Domäneninformationen von Grenzknoten in mindestens zwei Domänen zu erfassen und die Topologie auf Domänenebene, die die mindestens zwei Domänen umfasst, gemäß den Domäneninformationen der Grenzknoten in den mindestens zwei Domänen einzurichten, wobei der Knoten ein erster Grenzknoten in einer der mindestens zwei Domänen ist und die mindestens zwei Domänen nicht benachbarte Domänen umfassen; und
einen Speicher (34), der dazu ausgelegt ist, mit dem Prozessor (32) gekoppelt zu werden,
wobei die Domäneninformationen des Grenzknotens Folgendes umfassen: eine Domänenidentifikation, ID genannt, einer Domäne, zu der der Grenzknoten gehört, und Link-Informationen zwischen einer spezifizierten Domäne und der Domäne, zu der der Grenzknoten gehört, wobei die spezifizierte Domäne eine Domäne ist, die der Domäne benachbart ist, zu der der Grenzknoten gehört, und
wobei die Link-Informationen Folgendes umfassen: die Domänen-ID der Domäne, zu der der Grenzknoten gehört, eine Knoten-ID des Grenzknotens, eine Schnittstellen-Internet-Protokolladresse, IP-Adresse genannt, oder einen Schnittstellenindex des Grenzknotens, eine Domänen-ID der spezifizierten Domäne, eine ID eines Knotens, der dem Grenzknoten benachbart ist und in der spezifizierten Domäne ist, und eine Schnittstellen-IP-Adresse oder einen Schnittstellenindex des Knotens, der dem Grenzknoten benachbart ist und in der spezifizierten Domäne ist.

12. Netzwerksystem, Folgendes umfassend: mindestens zwei Domänen und mehrere Grenzknoten, die zu den mindestens zwei Domänen gehören, wobei die mindestens zwei Domänen nicht benachbarte Domänen umfassen,
jeder der mehreren Grenzknoten als ein erster Grenzknoten fungiert und dazu ausgelegt ist, Domäneninformationen der Grenzknoten in den mindestens zwei Domänen zu erfassen und eine Topologie auf Domänenebene, die die mindestens zwei Domänen umfasst, gemäß den Domäneninformationen der Grenzknoten in den mindestens zwei Domänen einzurichten, wobei die Domäneninformationen des Grenzknotens Folgendes umfassen: eine Domänenidentifikation, ID genannt, einer Domäne, zu der der Grenzknoten gehört, und Link-Informationen zwischen einer spezifizierten Domäne und der Domäne, zu der der Grenzknoten gehört, wobei die spezifizierte Domäne eine Domäne ist, die der Domäne benachbart ist, zu der der Grenzknoten gehört, und
wobei die Link-Informationen Folgendes umfassen: die Domänen-ID der Domäne, zu der der Grenzknoten gehört, eine Knoten-ID des Grenzknotens, eine Schnittstellen-Internet-Protokolladresse, IP-Adresse genannt, oder einen Schnittstellenindex des Grenzknotens, eine Domänen-ID der spezifizierten Domäne, eine ID eines Knotens, der dem Grenzknoten benachbart ist und in der spezifizierten Domäne ist, und eine Schnittstellen-IP-Adresse oder einen Schnittstellenindex des Knotens, der dem Grenzknoten benachbart ist und in der spezifizierten Domäne ist.

13. Speichermedium, ein gespeichertes Programm umfassend, wobei eine Vorrichtung, in der das Speichermedium angeordnet ist, gesteuert wird, das Verfahren nach einem der Ansprüche 1 bis 9 zu implementieren, wenn das Programm ausgeführt wird.

## Revendications

1. Procédé pour établir une topologie au niveau du domaine, comprenant :
l'acquisition (S102), par un premier nœud limitrophe, d'informations de domaine de nœuds limitrophes dans au moins deux domaines, le premier nœud limitrophe étant dans l'un des au moins deux domaines, et les au moins deux domaines comprenant des domaines non adjacents ; et l'établissement (S104), par le premier nœud limitrophe, de la topologie au niveau du domaine comprenant les au moins deux domaines en fonction des informations de domaine des nœuds limitrophes dans les au moins deux domaines,
dans lequel les informations de domaine du nœud limitrophe comprennent : une identification de domaine, ID, d'un domaine auquel appartient le nœud limitrophe, et des informations de liaison entre un domaine spécifié et le domaine auquel appartient le nœud limitrophe, le domaine spécifié étant un domaine adjacent au domaine auquel appartient le nœud limitrophe, et
dans lequel les informations de liaison comprennent : l'ID de domaine du domaine auquel appartient le nœud limitrophe, une ID de nœud du nœud limitrophe, une adresse de protocole Internet, IP, ou un index d'interface du nœud limitrophe, une ID de domaine du domaine spécifié, une ID d'un nœud adjacent au nœud limitrophe et dans le domaine spécifié, et une adresse IP d'interface ou un index d'interface du nœud adjacent au nœud limitrophe et dans le domaine spécifié.

2. Procédé selon la revendication 1, dans lequel l'acquisition (S102), par le premier nœud limitrophe, des informations de domaine des nœuds limitrophes dans les au moins deux domaines comprend :
l'acquisition, par le premier nœud limitrophe, d'informations de domaine configurées, et l'acquisition des informations de domaine des nœuds limitrophes dans les au moins deux domaines à l'exception du premier nœud limitrophe, en utilisant un protocole de passerelle limite, BGP.

3. Procédé selon la revendication 2, dans lequel l'acquisition, par le premier nœud limitrophe, des informations de domaine de nœuds limitrophes dans les au moins deux domaines à l'exception du premier nœud limitrophe en utilisant le BGP comprend :
l'acquisition, par le premier nœud limitrophe, des informations de domaine transmises par un premier nœud voisin spécifié du premier nœud limitrophe, en utilisant le BGP,
dans lequel le premier nœud voisin spécifié du premier nœud limitrophe comprend au moins l'un d'un nœud limitrophe dans un domaine auquel appartient le premier nœud limitrophe à l'exception du premier nœud limitrophe, et d'un nœud limitrophe adjacent au premier nœud limitrophe et dans un domaine adjacent au domaine auquel appartient le premier nœud limitrophe.

4. Procédé selon la revendication 1 ou 3, comprenant en outre :
la transmission, par le premier nœud limitrophe, des informations de domaine et des informations spécifiées du premier nœud limitrophe à un second nœud voisin spécifié du premier nœud limitrophe en utilisant le BGP, dans lequel les informations spécifiées sont des informations de domaine reçues par le premier nœud limitrophe et transmises par des nœuds voisins du premier nœud limitrophe à l'exception du second nœud voisin spécifié, et
dans lequel le second nœud voisin spécifié comprend au moins l'un d'un nœud limitrophe dans un domaine auquel appartient le premier nœud limitrophe à l'exception du premier nœud limitrophe, et d'un nœud limitrophe adjacent au premier nœud limitrophe et dans un domaine adjacent au domaine auquel appartient le premier nœud limitrophe.

5. Procédé selon la revendication 1, dans lequel les nœuds limitrophes dans les au moins deux domaines sont des nœuds limitrophes configurés avec une capacité d'annonce d'informations de domaine dans les au moins deux domaines.

6. Procédé selon la revendication 1, dans lequel les informations de domaine du nœud limitrophe comprennent en outre : un ensemble d'adresses IP publiquement disponibles dans le domaine auquel appartient le nœud limitrophe.

7. Procédé selon la revendication 1, comprenant en outre, après l'acquisition (S102), par le premier nœud limitrophe, des informations de domaine des nœuds limitrophes dans les au moins deux domaines :
le stockage, par le premier nœud limitrophe, des informations de domaine des nœuds limitrophes dans les au moins deux domaines.

8. Procédé selon la revendication 1 ou 7, comprenant en outre, après l'établissement (S104), par le premier nœud limitrophe, de la topologie au niveau du domaine comprenant les au moins deux domaines en fonction des informations de domaine des nœuds limitrophes dans les au moins deux domaines :
la réception, par le premier nœud limitrophe, d'informations de demande transmises par un client de calcul de trajet, PCC, pour demander l'établissement d'un trajet entre le premier nœud limitrophe et un nœud de destination spécifié, dans lequel le nœud de destination spécifié comprend l'un des éléments suivants : un nœud limitrophe dans la topologie au niveau du domaine à l'exception du premier nœud limitrophe, un nœud limitrophe correspondant à une adresse IP accessible au public dans la topologie au niveau du domaine à l'exception du premier nœud limitrophe, et dans lequel les informations de demande comprennent au moins les informations suivantes : une adresse IP du premier nœud limitrophe, une adresse IP du nœud de destination spécifié, et une contrainte pour le calcul de trajet ; et
la détermination d'une séquence de domaine du premier nœud limitrophe au nœud de destination spécifié, en fonction de la topologie au niveau du domaine et des informations de demande.

9. Procédé selon la revendication 1, comprenant en outre : l'intégration d'un élément de calcul de trajet, PCE, sur le premier nœud limitrophe, ou la configuration d'un PCE externe à l'extérieur d'un domaine auquel appartient le premier nœud limitrophe,
dans lequel, dans le cas où le PCE externe à l'extérieur du domaine auquel appartient le premier nœud limitrophe est configuré, l'établissement, par le premier nœud limitrophe, de la topologie au niveau du domaine en fonction des informations de domaine des nœuds limitrophes dans les au moins deux domaines comprend :
la transmission, par le premier nœud limitrophe, d'informations de domaine acquises des nœuds limitrophes dans les au moins deux domaines au PCE externe, de telle sorte que le PCE externe établit la topologie au niveau du domaine en fonction des informations de domaine des nœuds limitrophes dans les au moins deux domaines.

10. Dispositif pour établir une topologie au niveau du domaine, appliqué dans un premier nœud limitrophe, comprenant :
un module d'acquisition (22) configuré pour acquérir des informations de domaine de nœuds limitrophes dans au moins deux domaines, le premier nœud limitrophe étant dans l'un des au moins deux domaines, et les au moins deux domaines comprenant des domaines non adjacents ; et un module d'établissement (24) configuré pour établir la topologie au niveau du domaine comprenant les au moins deux domaines en fonction des informations de domaine des nœuds limitrophes dans les au moins deux domaines,
dans lequel les informations de domaine du nœud limitrophe comprennent : une identification de domaine, ID, d'un domaine auquel appartient le nœud limitrophe, et des informations de liaison entre un domaine spécifié et le domaine auquel appartient le nœud limitrophe, le domaine spécifié étant un domaine adjacent au domaine auquel appartient le nœud limitrophe, et
dans lequel les informations de liaison comprennent : l'ID de domaine du domaine auquel appartient le nœud limitrophe, une ID de nœud du nœud limitrophe, une adresse de protocole Internet, IP, ou un index d'interface du nœud limitrophe, une ID de domaine du domaine spécifié, une ID d'un nœud adjacent au nœud limitrophe et dans le domaine spécifié, et une adresse IP d'interface ou un index d'interface du nœud adjacent au nœud limitrophe et dans le domaine spécifié.

11. Nœud, comprenant :
un processeur (32) configuré pour : acquérir des informations de domaine de nœuds limitrophes dans au moins deux domaines, et établir la topologie au niveau du domaine comprenant les au moins deux domaines en fonction des informations de domaine des nœuds limitrophes dans les au moins deux domaines, le nœud étant un premier nœud limitrophe dans l'un des au moins deux domaines, et les au moins deux domaines comprenant des domaines non adjacents ; et
une mémoire (34) configurée pour être couplée au processeur (32),
dans lequel les informations de domaine du nœud limitrophe comprennent : une identification de domaine, ID, d'un domaine auquel appartient le nœud limitrophe, et des informations de liaison entre un domaine spécifié et le domaine auquel appartient le nœud limitrophe, le domaine spécifié étant un domaine adjacent au domaine auquel appartient le nœud limitrophe, et
dans lequel les informations de liaison comprennent : l'ID de domaine du domaine auquel appartient le nœud limitrophe, une ID de nœud du nœud limitrophe, une adresse de protocole Internet, IP, ou un index d'interface du nœud limitrophe, une ID de domaine du domaine spécifié, une ID d'un nœud adjacent au nœud limitrophe et dans le domaine spécifié, et une adresse IP d'interface ou un index d'interface du nœud adjacent au nœud limitrophe et dans le domaine spécifié.

12. Système de réseau, comprenant : au moins deux domaines, et une pluralité de nœuds limitrophes appartenant aux au moins deux domaines, dans lequel les au moins deux domaines comprennent des domaines non adjacents,
chacun de la pluralité de nœuds limitrophes fonctionne comme un premier nœud limitrophe, et est configuré pour acquérir des informations de domaine des nœuds limitrophes dans les au moins deux domaines, et établir une topologie au niveau du domaine comprenant les au moins deux domaines en fonction des informations de domaine des nœuds limitrophes dans les au moins deux domaines,
dans lequel les informations de domaine du nœud limitrophe comprennent : une identification de domaine, ID, d'un domaine auquel appartient le nœud limitrophe, et des informations de liaison entre un domaine spécifié et le domaine auquel appartient le nœud limitrophe, le domaine spécifié étant un domaine adjacent au domaine auquel appartient le nœud limitrophe, et
dans lequel les informations de liaison comprennent : l'ID de domaine du domaine auquel appartient le nœud limitrophe, une ID de nœud du nœud limitrophe, une adresse de protocole Internet, IP, ou un index d'interface du nœud limitrophe, une ID de domaine du domaine spécifié, une ID d'un nœud adjacent au nœud limitrophe et dans le domaine spécifié, et une adresse IP d'interface ou un index d'interface du nœud adjacent au nœud limitrophe et dans le domaine spécifié.

13. Support de stockage, comprenant un programme stocké, dans lequel un dispositif dans lequel le support de stockage est situé est commandé pour mettre en œuvre le procédé selon l'une quelconque des revendications 1 à 9 lorsque le programme est exécuté.
